# EUROPÄISCHE PATENTSCHRIFT

(11) **EP 3 256 530 B1**
(45) Veröffentlichungstag und Bekanntmachung des Hinweises auf die Patenterteilung: **10.10.2018**
(21) Anmeldenummer: 15703306.9
(22) Anmeldetag: 10.02.2015
(51) Int. Cl.: C09D 5/00

(54) **TROPFFÄHIGE WÄSSRIGE BESCHICHTUNGSMASSEN, INSBESONDERE DISPERSIONSBESCHICHTUNGSMASSEN, SOWIE PRÜFVORRICHTUNG ZUR BESTIMMUNG DES SPRITZVERHALTENS VON TROPFFÄHIGEN WÄSSRIGEN BESCHICHTUNGSMASSEN**
DRIP-FORMING AQUEOUS COATING COMPOUNDS, IN PARTICULAR DISPERSION COATING COMPOUNDS, AND TESTING DEVICE FOR DETERMINING THE SPRAY BEHAVIOUR OF DRIP-FORMING AQUEOUS COATING COMPOUNDS
MASSES DE REVÊTEMENT AQUEUSES POUVANT S'ÉGOUTTER, EN PARTICULIER MASSES DE REVÊTEMENT DE DISPERSION, ET PROCÉDÉ DE CONTRÔLE POUR LA DÉTERMINATION DU COMPORTEMENT À L'INJECTION DES MASSES DE REVÊTEMENT AQUEUSES POUVANT S'ÉGOUTTER

(43) Veröffentlichungstag der Anmeldung: 20.12.2017
(73) Patentinhaber: DAW SE, 64372 Ober-Ramstadt (DE)
(72) Erfinder: WEINHOLD, Petra, 64572 Buettelborn (DE); SEEGER, Alexander, 64739 Hoechst (DE); BRENNER, Thomas, 64367 Muehltal (DE); ZIEGLER, Michael, 64401 Groß-Bieberau (DE); SEIBEL, Michael, 64646 Heppenheim (DE)
(74) Vertreter: Metten, Karl-Heinz
(86) Internationale Anmeldenummer: PCT/EP2015/052804
(87) Internationale Veröffentlichungsnummer: WO 2016/128033

(56) Entgegenhaltungen:
- WO-A1-2005/071023
- WO-A1-2010/074865
- WO-A1-2014/070822
- CN-A- 102 702 938
- CN-A- 103 694 872
- DE-A1- 10 106 566
- DE-C1- 19 808 869
- US-A1- 2010 104 884

## Beschreibung

Die vorliegende Erfindung betrifft tropffähige wässrige Beschichtungsmassen, insbesondere Dispersionsbeschichtungsmassen, sowie eine Prüfvorrichtung zur Bestimmung des Spritzverhaltens von tropffähigen wässrigen Beschichtungsmassen, insbesondere Dispersionsbeschichtungsmassen, und ein Verfahren zur Bestimmung des Spritzverhaltens beim Auftragen von derartigen Beschichtungsmassen mit der Malerwalze.

Für die Beschichtung von Wandflächen, insbesondere solchen im Innenbereich, wird regelmäßig auf Dispersionsbeschichtungsmassen zurückgegriffen. Hierbei kann es sich z.B. um Kunststoffdispersionsfarben handeln. Insbesondere der großflächige Beschichtungsauftrag erfolgt regelmäßig mit Hilfe einer Malerwalze. Derartige Malerwalzen sind dabei mit einem aus einer Vielzahl an Fasern gebildeten Florbesatz ausgestattet, der auf einem rotierenden Walzenkörper vorliegt. Je nach Beladung des Florbesatzes mit der Dispersionsfarbe, der Rotationsgeschwindigkeit der Walze, dem Walzendurchmesser oder der Walzenart kann es beim Auftragen der Dispersionsfarbe zu Spritzern kommen. Dies ist insbesondere bei dem Versehen von Innenraumdecken mit einem Farbanstrich sehr hinderlich. Um Gegenstände bzw. Bodenbeläge nicht irreparabel zu beschädigen, sind daher vor der Aufnahme von Malerarbeiten umfangreiche Schutzvorkehrungen wie das Abdecken bzw. Abkleben von Arealen und Gegenständen, die nicht durch Farbspritzer in Mitleidenschaft gezogen werden sollen, vorzunehmen. Dieses ist sehr zeitaufwändig und erhöht vielfach den Aufwand bzw. die Kosten für Malerarbeiten ganz erheblich. Auch kann es unter arbeitsmedizinischen Bedingungen wünschenswert sein, mit Dispersionsfarben zu arbeiten, die besonders spritz- bzw. nebelarm appliziert werden können. Auf diese Weise kann vermieden werden, dass Spritzpartikel in die Augen gelangen.

In welchem Umfang eine Kunststoffdispersionsfarbe beim Auftragen mit der Malerwalze Spritzer bildet, hängt von einer Vielzahl von Einzelfaktoren wie Verarbeitungsgeschwindigkeit, Beladung, Walzentyp, Walzendurchmesser und Länge der Fasern des Florbesatzes ab. So kann je nach Rotationsgeschwindigkeit, Walzendurchmesser und/oder Florbesatz ein Punkt, auch Spritzpunkt genannt, erreicht werden, an dem die resultierende Zentrifugalkraft die Haftung der Kunststoffdispersionsfarbe an die Fasern der Walze übersteigt und es zur Bildung von Spritzern kommt. Die Tendenz zur Bildung von Spritzern beim Auftrag mit der Malerwalze ist insbesondere bei sogenannten überkritischen Dispersionsfarben, wie sie regelmäßig für Innenanstriche verwendet werden, besonders ausgeprägt. Hierbei handelt es sich um solche Formulierungen, bei denen die kritische Pigment-Volumen-Konzentration überschritten wurde. Die kritische Pigment-Volumen-Konzentration gibt diejenige Konzentration an, bei der die Pigmente und Füllstoffe in der getrockneten Beschichtung gerade noch vom Bindemittel benetzt werden.

Die CN 103 694 872 A stellt ab auf eine Zusammensetzung enthaltend eine aliphatische Polyure-thandispersion, eine Dispersion eines aliphatischen Polyesters, filmbildende Additive und Wasser. Hierbei haben in der Zusammensetzung, bezogen auf die Menge an Polyurethandispersion, die Dispersion des aliphatischen Polyesters in 10 bis 40 Gewichtsteilen, die filmbildenden Additive in 10 bis 25 Gewichtsteilen und Wasser in 5 bis 10 Gewichtsteilen zugegen zu sein. Mit derartigen Zusammensatzungen sollen sich peelfähige Beschichtungen erhalten lassen.

Die WO 2014/070822 A1 befasst sich mit einer Dispersion enthaltend keramische oder Kohlenstoffnanopartikel mit chemisch funktionalisierter Oberfläche, die in einer Polymermatrix vorliegen und über eine Größe im Bereich von 8 bis 120 nm verfügen. Diese Dispersionen sollen widerstandsfähiger gegenüber Umwelteinflüssen wie UV- und IR-Strahlung, saurem Regen, Hitze, Kälte, Pilz- und Bakterienbefall sowie Korrosion und Oxidation sein.

Auch die CN 102 702 938 A befasst sich mit peelfähigen Beschichtungen, und zwar hier insbesondere solchen, die als Schutzbeschichtung für die Karosserie von Neuwagen dienen sollen. Derartige Beschichtungen sollen aus wässrigen Zusammensetzungen erhalten werden, enthaltend 10 bis 30 Teile an Adhäsionsmodifier, 7 bis 15 Teile an entionisiertem Wasser, 7 bis 15 Teile an Ethanol und 60 bis 90 Teile an einem vernetzenden Bindemittel in einem organischen Lösungsmittel. Hierbei hat das Bindemittel 15 bis 70 % eines speziellen acrylischen Polyols, 5 bis 60% eines speziellen Polyesterpolyols und 10 bis 60% eines Vernetzers ausgewählt aus alkoxylierten Melamin/Formaldehyd-Addukten und Polyisocyanaten zu enthalten.

Die WO 2010/074865 A1 offenbart eine Kleberzusammensetzung enthaltend 93% bis 99.96% an Polymerpartikeln. Diese Zusammensetzungen enthalten Vinylester der Versatinsäure und sollen sich durch einen reduzierten VOC-Wert auszeichnen.

Die US 2010/104884 A1 offenbart eine wässrige Beschichtungszusammensetzung enthaltend ein oder mehrere filmbildende Latexpolymere sowie ein Feuchthaltemittel enthaltend ein oder mehrere Polyglycerine. Auf diese Weise sollen Beschichtungszusammensetzungen erhalten werden, die ohne Ethylenglykol und Propylenglykol auskommen und die sich gleichzeitig durch einen reduzierten VOC-Wert auszeichnen.

In der WO 2005/071023 A1 wird eine wässrige Fleckenschutzbeschichtung beschrieben enthaltend ein organisches Bindemittel und schichtenförmige anorganische Nanopartikel mit kationisch geladenen Schichten als Fleckenschutzmittel. Auf diese Weise sollen selbstreinigende, einheitlich trocknende Beschichtungen erhalten werden.

Gemäß der DE 101 06 566 A1 sollen sich wässrige Beschichtungsstoffe, die im Wesentlichen frei von flüchtigen organischen Stoffen sind, durch Vermengung von (A) wässrigen Primärdispersionen, enthaltend dispergierte und/oder emulgierte, feste und/oder flüssige Polymerpartikel und/oder dispergierte feste Kern-Schale-Partikel mit einem Teilchendurchmesser < 500 nm, herstellbar durch radikalische Mikro- oder Miniemulsionspolymerisation mindestens eines olefinisch ungesättigten Monomeren in der Gegenwart mindestens eines hydrophoben Zusatzstoffs, und (B) sekundären wässrigen Polyurethandispersionen, enthaltend mindestens ein Polyurethan und mindestens ein Lichtschutzmittel, ausgewählt aus der Gruppe der regenerierbaren Radikalfänger, erhalten lassen. Derartige Beschichtungsstoffe sollen lagerstabil sein und Beschichtungen bzw. Lackierungen liefern, die witterungsstabil, lichtstabil und frei von Trübungen und Inhomogenitäten sind.

Die DE 198 08 869 C1 hat wässrige Überzugsmittel auf der Basis von einem oder mehreren Bindemitteln, einem oder mehreren Metalliceffektpigmenten sowie gegebenenfalls Vernetzern, weiteren Pigmenten und/oder Füllstoffen, lacktechnischen Additiven und/oder semitteln zum Gegenstand. Die Bindemittel haben eine wässrige Dispersion zu enthalten aus A) 50 bis 90 Gew.-% eines Reaktionsproduktes aus a) 5 bis 95 Gew.-% eines carboxyfunktionellen Polykondensats, das zusätzlich Epoxidgruppen enthält, und b) 95 bis 5 Gew.-% mindestens eines radikalisch polymerisierbaren olefinisch ungesättigten Monomeren, wobei sich die Mengenangaben der Bestandteile a) und b) auf den Festkörper beziehen und ihre Summe stets 100 Gew.-% betragt, B) 50 bis 10 Gew.-% eines Hybridpolymeren, hergestellt durch radikalische Polymerisation von olefinisch ungesättigten Monomeren in Gegenwart von wässrig dispergierten Siloxanbrücken und/oder Silanolgruppen sowie gegebenenfalls olefinisch ungesättigte Doppelbindungen enthaltenden Polyurethanharzen, wobei die Summe der Gew.-% von A) und B) 100 Gew.-% ergibt, und G) 0 bis 50 Gew.-%, bezogen auf die Summe aus A) und B), eines oder mehrerer weiterer Bindemittel, wobei sich sämtliche Gew.-%-Angaben jeweils auf den Festkörper beziehen. Aus den genannten wässrigen Metallicbasislacken sollen Überzüge zugänglich sein, die hinsichtlich Brillanz, Deckvermögen und Metalleffekt denen aus dem Stand der Technik bekannten Überzügen überlegen sind.

Es wäre daher wünschenswert, auf Dispersionsbeschichtungssysteme mit optimierten Spritzeigenschaften zurückgreifen zu können, mit denen der Spritzpunkt auf eine möglichst hohe Rotationsgeschwindigkeit der Malerwalze verlagert werden kann und/oder mit denen es gelingt, die Größe der Spritzer signifikant zu reduzieren.

Um das Spritzverhalten einer Kunststoffdispersionsfarbe festzustellen, hat man bislang bei manuellem Auftrag auf einer horizontalen Oberfläche Spritzer detektiert, die sich auf einem schwarzen Karton, der vor der Applikationsfläche in horizontaler Ausrichtung liegend angebracht war, niederschlagen. Eine Vergleichbarkeit von unterschiedlichen Farbrezepturen sowie eine verlässliche Wiederholbarkeit mit ein und derselben Farbrezeptur sind auf diese Weise nicht möglich. Es hat daher auch an geeigneten Verfahren bzw. Vorrichtungen gefehlt, das Spritzverhalten von Kunststoffdispersionsfarben verlässlich und wiederholbar zu bestimmen.

Der vorliegenden Erfindung lag daher die Aufgabe zugrunde, ein Beschichtungssystem bzw. ein Dispersionsbeschichtungssystem und insbesondere ein überkritisches Beschichtungssystem zur Verfügung zu stellen, mit dem bei einem Auftrag desselben mit einer Malerwalze auf einer Wand oder einer Decke die Bildung von Spritzern merklich zurückgedrängt und/oder die Größe der Spritzer reduziert bzw. gering gehalten werden kann.

Ferner lag der vorliegenden Erfindung die Aufgabe zugrunde, eine Prüfvorrichtung bzw. ein Prüfverfahren zur Verfügung zu stellen, das nicht mehr mit den Mängeln des Stands der Technik behaftet ist und das insbesondere eine zuverlässige und wiederholbare Prüfung von Farben, insbesondere Dispersionsfarben im Hinblick auf ihr Spritzverhalten ermöglicht.

Demgemäß wurde eine tropffähige wässrige Beschichtungsmasse, insbesondere Dispersionsbeschichtungsmasse, gefunden, enthaltend mindestens ein anorganisches, in Wasser lösliches Bindemittel oder mindestens ein organisches, in Wasser dispergiertes oder dispergierbares Bindemittel, mindestens einen Füllstoff und/oder mindestens ein Pigment, mindestens einen Verdicker, ausgewählt aus der Gruppe bestehend aus Polyurethanverdickern, Acrylatverdickern, Polyether-Polyol-Verdickern, Verdicker auf Polysaccharidbasis, Schichtsilikaten und organisch modifizierten Schichtsilikaten oder deren beliebige Mischungen, und Wasser, wobei die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ aufweist, die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und/oder die über eine über den Bereich der Schergeschwindigkeiten γ̇ von 10 bis 150 s⁻¹ ermittelte mittlere Steigung im Bereich von 1,2 bis 5, vorzugsweise im Bereich von 1,5 bis 4 und besonders bevorzugt im Bereich von 1,5 bis 3,5 Pa·s verfügt und/oder die über eine über den Bereich der Schergeschwindigkeiten γ̇ von 10 bis 300^{s-1} ermittelte mittlere Steigung im Bereich von 0,85 bis 3,5, bevorzugt von 0,9 bis 3 und besonders bevorzugt von 1,0 bis 2,5 Pa·s verfügt und/oder
die über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt und/oder dass die für die Beschichtungsmasse, insbesondere Dispersionsbeschichtungsmasse, ermittelte maximale Schubspannung τₘₐₓ oder dass die bei einer Schergeschwindigkeit γ̇ von 1500 s⁻¹ ermittelte Schubspannung τ größer oder gleich 650 Pa, bevorzugt größer oder gleich 700 Pa, ist und/oder dass die Schergeschwindigkeit γ̇ bei 50% der maximalen Schubspannung τₘₐₓ oder die Schergeschwindigkeit γ̇ bei 50 % der Schubspannung τ, die sich bei einer Schergeschwindigkeit von 1500 s⁻¹ einstellt, nicht oberhalb von 200 s⁻¹, bevorzugt nicht oberhalb von 180 s⁻¹ und besonders bevorzugt nicht oberhalb von 150 s⁻¹ liegt. Tropffähige wässrige Beschichtungsmasse stellt ab auf eine bei Raumtemperatur tropffähige wässrige Beschichtungsmasse.

Mit der vorliegenden Erfindung wurde für Beschichtungsmassen, insbesondere Dispersionsbeschichtungsmassen, ein Rheologieprofil gefunden, das bei der Applikation mit einer Malerwalze zu einer stark reduzierten Spritzneigung führt. Hierbei sind solche Beschichtungsmassen, insbesondere Dispersionsbeschichtungsmassen, besonders bevorzugt, bei denen die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ, aufweist, die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und die gleichzeitig über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt.

Unter den erfindungsgemäßen Beschichtungsmasse, insbesondere Dispersionsbeschichtungsmassen, weisen solche eine ausgeprägte reduzierte Spritzneigung bei Auftrag mit der Malerwalze auf, die eine Fließkurve zeigen, gebildet aus den auf der Abszisse aufgetragenen Schergeschwindigkeiten γ̇ und den auf der Ordinate aufgetragenen korrespondierenden Schubspannungswerten τ, die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und die gleichzeitig über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt und bei der darüber hinaus die für die Beschichtungsmasse, insbesondere Dispersionsbeschichtungsmasse, ermittelte maximale Schubspannung τₘₐₓ oder die bei einer Schergeschwindigkeit γ̇ von 1500 s⁻¹ ermittelte Schubspannung τ größer oder gleich 650 Pa, bevorzugt größer oder gleich 700 Pa, ist.

Ein stark reduziertes Spritzverhalten stellt sich insbesondere auch mit solchen Beschichtungsmassen, insbesondere Dispersionsbeschichtungsmassen, ein, die eine Fließkurve, gebildet aus den auf der Abszisse aufgetragenen Schergeschwindigkeiten γ̇ und den auf der Ordinate aufgetragenen korrespondierenden Schubspannungswerten τ, besitzt, die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und die gleichzeitig über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt und bei der zudem die Schergeschwindigkeit γ̇ bei 50% der maximalen Schubspannung τₘₐₓ oder die Schergeschwindigkeit γ̇ bei 50 % der Schubspannung τ, die sich bei einer Schergeschwindigkeit von 1500 s⁻¹ einstellt, nicht oberhalb von 200 s⁻¹, bevorzugt nicht oberhalb von 180 s⁻¹ und besonders bevorzugt nicht oberhalb von 150 s⁻¹ liegt. Bevorzugt wird dabei nicht auf die maximale Schubspannung τₘₐₓ sondern auf die Schubspannung abgestellt, die sich bei einer Schergeschwindigkeit von 1500 s⁻¹ einstellt.

Die Fließkurven lassen sich z.B. mit dem Rotationsrheometer HAAKE RheoStress 1 der Firma Thermo Scientific unter Verwendung der Sofware HAAKE RheoWin 4.30.0021 bestimmen. Um vergleichbare Ergebnisse zu erhalten, sollten die Messungen bei konstanter Raumtemperatur, beispielsweise bei 23,00 °C ± 0,20 °C vorgenommen werden. Im Allgemeinen reicht es aus, eine Rotationsrampe von 0 bis 1.500 s⁻¹ im Zeitraum von 180 s zu fahren. Form und Material bzw. die Messgeometrie der Messapparatur bzw. des Rotors basieren zweckmäßigerweise auf der Spezifikation Z20 DIN Ti. Ein geeignetes Spaltmaß beträgt 4,200 mm, ein geeignetes Mess- bzw. Probenvolumen 8,2 ml. Zur Minimierung von Messfehlern sind nur Messpunkte bei Schergeschwindigkeiten größer 10 s⁻¹ zu berücksichtigen. Die Steigung m zwischen Messpunkten wurde nach der folgenden Gleichung berechnet: m = Δτ / Δγ̇. Der den genannten Schergeschwindigkeitsbereichen zugewiesene Mittelwert der Steigung der Fließkurve errechnet sich aus den Mittelwerten der Steigungen zwischen den einzelnen Messpunkten in dem genannten Bereich der Schergeschwindigkeiten.

Die mit den erfindungsgemäßen Beschichtungsmassen erhaltenen Fließkurven zeichnen sich im Allgemeinen durch eine hohe Anfangssteigung aus sowie dadurch, dass sich relativ zügig ein asymptotischer Kurvenverlauf einstellt und gegebenenfalls auch durch einen hohen Wert der maximalen Schubspannung bzw. einen hohen Wert der Schubspannung bei einer Schergeschwindigkeit von 1.500 s⁻¹ bzw. einen Wert der maximalen Schubspannung bzw. einen Wert der Schubspannung bei einer Schergeschwindigkeit von 1.500 s⁻¹ der oberhalb der Schubspannungswerte für korrespondierende Schergeschwindigkeiten von Beschichtungsmassen mit stärkerer Spritzneigung liegt.

Mit den erfindungsgemäßen Beschichtungsmassen, insbesondere Dispersionsbeschichtungsmassen, gelingt es, Systeme zur Verfügung zu stellen, die sich spritz- oder nebelarm sowie insbesondere spritz- oder nebelfrei applizieren lassen. Geeignete erfindungsgemäße Beschichtungsmassen umfassen Silikatfarben und Siliconharzfarben und geeignete Dispersionsbeschichtungsmassen umfassen Dispersionssilikatfarben und auch Kunststoffdispersionsfarben.

Silikatfarben basieren auf Wasserglas, insbesondere Kaliumwasserglas, als Bindemittel und Pulverstoffen (wie wasserglasbeständigen Pigmenten und/oder Füllstoffen sowie gegebenenfalls Hilfsstoffen. Dispersionssilikatfarben, auch Organosilikatfarben genannt, enthalten zusätzlich noch eine Kunststoffdispersion, beispielsweise bis zu 5 Gew.-% (Feststoffgehalt) einer solchen Kunststoffdispersion sowie regelmäßig auch mindestens ein Dispergiermittel und/oder mindestens ein Hydrophobierungsmittel. Geeignete Dispergiermittel umfassen Tetrakaliumdiphosphat, Natriumpolyphosphat, Natriumpolyacrylat oder eine Mischung enthaltend wasserlösliches Diphosphat, insbesondere Tetrakaliumdiphosphat, ein anionisches Netzmittel, insbesondere ein verseiftes oder insbesondere unverseiftes Ethoxylat, ein Alkalihydroxid, insbesondere Kaliumhydroxid, und Wasser. Geeignete Hydrophobierungsmittel umfassen z.B. Polysiloxane und insbesondere aminofunktionelle Polysiloxane. Bei den Dispersionssilikatfarben fungiert auch das Wasserglas, insbesondere Kaliumwasserglas, als Bindemittel. Bevorzugt wird sowohl bei Silikatfarben als auch bei Dispersionssilikatfarben auf Kaliumwasserglas zurückgegriffen, bei dem das Verhältnis von K₂O zu SiO₂ im Bereich von 1:3,5 bis 1:3,9 liegt. Kunststoffdispersionsfarben enthalten als Bindemittel eine Kunststoffdispersion, beispielsweise Polyvinylacetat, Polyvinylpropionat oder Styrol/AcrylatCopolymere in Wasser. Die Verfestigung geschieht nicht durch Reaktion, sondern nur durch eine Filmbildung nach Verdampfen des Wassers. Siliconharzfarben sind in der Regel wasserverdünnbar und enthalten als Bindemittel ausschließlich oder überwiegend Siliconharze. Der Bindemittelgehalt kann hierbei im Allgemeinen derart eingestellt werden, dass Eigenschaften wie Wasserdampfdurchlässigkeit erfüllt werden.

Das Bindemittel kann demgemäß ein anorganisches Bindemittel, insbesondere Wasserglas, z.B. Natrium-, Kalium-, Lithiumwasserglas oder beliebige Mischungen hiervon, insbesondere Kaliumwasserglas, sein, soweit Silikatfarben und Dispersionssilikatfarben betroffen sind, oder ein organisches Bindemittel auf Basis mindestens eines in Wasser dispergierten oder dispergierbaren Polymers, sdinoweit Dispersionssilikatfarben und Kunststoffdispersionsfarben betroffen sind oder mindestens ein in Wasser emulgierbarer Siliconharz, soweit Siliconharzfarben betroffen sind.

Solche Beschichtungsmassen, insbesondere Dispersionsbeschichtungsmasse, sind besonders geeignet, bei denen das organisches Bindemittel Vinylacetat/Ethylen-Copolymere, Copolymere auf Basis von Vinylaromaten, insbesondere Styrol, und Acrylaten oder auf Basis von Reinacrylaten umfasst oder darstellt. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol.

Erfindungsgemäße Beschichtungsmassen, insbesondere in Form von Kunststoffdispersionsfarben, enthalten bevorzugt, bezogen auf das Gesamtgewicht der Dispersionsbeschichtungsmasse, 1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt).

Solche erfindungsgemäßen Beschichtungsmassen, insbesondere in Form von Dispersionssilikatfarben, Kunststoffdispersionsfarben, Siliconharzfarben und Silikatfarben, liefern ein besonders günstiges, spritzarmes bzw. spritzfreies Rheologieprofil, die dadurch gekennzeichnet sind, dass der mindestens eine Verdicker ein Acrylatverdicker oder ein Polyurethanverdicker oder ein Verdicker auf Polysaccharidbasis oder ein Verdicker auf Polyether-Polyolbasis oder ein Schichtsilikat ist oder eine beliebige Mischung hiervon. Geeignete Verdickermischungen umfassen z.B. Mischungen aus mindestens einem Acrylatverdicker und mindestens einem Verdicker auf Polysaccharidbasis oder Mischungen aus mindestens einem Polyurethanverdicker und mindestens einem Verdicker auf Polysaccharidbasis oder Mischungen aus mindestens einem Acrylatverdicker und mindestens einem Verdicker auf Basis von Schichtsilikaten.

Im einfachsten Fall basieren Polyurethan-Verdicker auf einem hydrophilen Mittelblock aus Poly(ethylenoxid) (PEO)-Einheiten, an den durch Umsetzung mit einem Diisocyanat und einem Fettalkohol über Urethanbindungen zwei hydrophobe Endsegmente angeknüpft wurden. Bei Polyurethan-Verdickern handelt es sich somit im Allgemeinen um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe. Geeignete Polyurethan-Verdicker sind dem Fachmann bekannt. Das Molekulargewicht solcher Polyurethanverdicker liegt üblicherweise im Bereich von 10⁴ bis 10⁵ g/mol.

In den erfindungsgemäßen Dispersionsbeschichtungsmasse kommen bevorzugt, jeweils bezogen auf das Gesamtgewicht der Dispersionsbeschichtungsmasse, 0,2 bis 5 Gewichtsprozent, besonders bevorzugt 0,5 bis 4 Gewichtsprozent und insbesondere 0,7 bis 3 Gewichtsprozent an Polyurethanverdickern zum Einsatz.

Unter den Acrylatverdickern sind sogenannte HASE-Verdicker (hydrophobically modified alkali soluble emulsion) bevorzugt, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden. Diese verfügen regelmäßig über eine eingeschränkte Wasserlöslichkeit. Besonders geeignete Acrylatverdicker, insbesondere der HASE-Acrylatverdicker, weisen ein zahlenmittleres Molekulargewicht Mₙ im Bereich von 100 bis 300 kDa, bevorzugt im Bereich von 150 bis 250 kDa, z.B. im Bereich von 170 bis 200 kDa, und/oder ein gewichtsmittleres Molekulargewicht Mₙ im Bereich von 400 bis 800 kDa, bevorzugt im Bereich von 500 bis 700 kDa, z.B. im Bereich von 550 bis 650 kDa, auf.

In den erfindungsgemäßen Dispersionsbeschichtungsmasse kommen bevorzugt, jeweils bezogen auf das Gesamtgewicht der Dispersionsbeschichtungsmasse, 0,5 bis 4 Gewichtsprozent, bevorzugt 0,7 bis 3 Gewichtsprozent und besonders bevorzugt 1 bis 2,5 Gewichtsprozent an Acrylatverdickern zum Einsatz.

Geeignete Verdicker auf Polysaccharidbasis umfassen z.B. Cellulose, mikrokristalline Cellulose, Celluloseether und modifizierte Celluloseether, insbesondere hydrophob modifizierte Celluloseether, und auch Polysaccharide, die sich von den Galactomannosen ableiten, z.B. Polygalactomannosen, des Weiteren Polysaccharide auf Basis von Carrageen, Guarkernmehl, Xanthan und Johannisbrotkernmehl. Beispielhaft seien als modifizierte Celluloseether Methylcellulose, Hydroxypropylmethylcellulose, Hydroxyethylcellulose, Hydroxypropylcellulose, Ethylhydroxyethylcellulose und Natriumcarboxymethylcellulose, genannt. Als hydrophob modifizierte Celluloseether kommen z.B. die Reaktionsprodukte von Hydroxyethylcellulose oder Hydroxypropylcellulose mit dem Glycidylether von N-Ethyl-N-2-hydroxyethylperfluoroctansulfonamid (FC10-HEC) sowie nichtionische Celluloseether mit Methyl-, Hydroxyethyl- und Hydroxypropyl-Resten sowie mit einem langkettigen, über eine Etherbindung gebundenen Alkylrest mit 10 bis 24 Kohlenstoffatomen in Betracht.
In den erfindungsgemäßen Dispersionsbeschichtungsmasse kommen bevorzugt, jeweils bezogen auf das Gesamtgewicht der Dispersionsbeschichtungsmasse, 0,01 bis 1 Gewichtsprozent, besonders bevorzugt 0,02 bis 0,5 Gewichtsprozent und insbesondere 0,02 bis 0,3 Gewichtsprozent an Polysaccharidverdickern zum Einsatz.

Geeignete Verdicker auf Basis von Schichtsilikaten können ausgewählt sein aus der Gruppe bestehend aus Smectit, Montmorillonit, Hectorit und Bentonit oder deren Mischungen. Neben den herkömmlichen, d.h. den nicht organisch modifizierten bzw. nicht in delamierter Form vorliegenden Schichtsilikaten, kann man zusätzlich oder alternativ des Weiteren auch auf organisch modifizierte Schichtsilikate als Verdicker zurückgreifen. Organisch modifizierte Schichtsilikate sind dem Fachmann bekannt und sind auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindungen. Besonders bevorzugt erhält man solche delaminierten Schichtsilikate mittels Modifizierung mit Alkylammonium- oder Ammoniumalkoxylat-Verbindungen. In den erfindungsgemäßen Dispersionsbeschichtungsmasse kommen bevorzugt, jeweils bezogen auf das Gesamtgewicht der Dispersionsbeschichtungsmasse, 0,01 bis 0,5 Gewichtsprozent, besonders bevorzugt 0,02 bis 0,3 Gewichtsprozent und insbesondere 0,02 bis 0,2 Gewichtsprozent an organisch-modifizierten und/oder nicht organisch-modifizierten Schichtsilikaten zum Einsatz.

Geeignete Polyether-Polyol-Verdicker sind dem Fachmann bekannt. Exemplarisch sei auf "Wässrige Siliconharz-Beschichtungssysteme für Fassaden", Wolfgang Schultze, 2. Aufl., Seiten 345 bis 347, verwiesen (ISBN 3-8169-1966-9). In den erfindungsgemäßen Dispersionsbeschichtungsmasse kommen bevorzugt, jeweils bezogen auf das Gesamtgewicht der Dispersionsbeschichtungsmasse, 0,2 bis 5 Gewichtsprozent, besonders bevorzugt 0,3 bis 4 Gewichtsprozent und insbesondere 0,5 bis 3 Gewichtsprozent an Polyether-Polyol-Verdickern zum Einsatz.

Die erfindungsgemäßen Beschichtungsmassen, insbesondere Dispersionsbeschichtungsmassen, sind mit Füllstoffen und/oder Pigmenten, vorzugsweise mit Füllstoffen und Pigmenten ausgestattet. Füllstoffe und Pigmente sind feste Materialien in der Beschichtungsmasse, die z.B. eine sphärische, kubische, nadelförmige, faserige oder auch plättchenförmige Gestalt aufweisen. Sie können chemische und physikalische Eigenschaften durch Wechselwirkung an der Beschichtungsoberfläche und durch ihr eigenes Eigenschaftsbild, wie Härte, Korngröße, Kornform, Farbe, Glanz usw. verändern. Die mittlere Teilchengröße geeigneter Füllstoffe (ausgedrückt als d50-Wert) liegt vorzugsweise im Bereich von 1 bis 50 µm, kann aber in Form von sogenannten Grobfüllstoffen bis zu 200 µm betragen. Die erfindungsgemäßen Beschichtungsmassen, insbesondere Dispersionsbeschichtungsmasse sind bevorzugt mit Füllstoffe ausgestattet, die ausgewählt sind aus der Gruppe bestehend aus, Silikaten, z.B. Diatomeenerde, gefällte oder pyrogene Kieselsäure, Serpentin, Kaolin, Talk, Pyrophyllit, Vermiculit, Illit, Glimmer, Sprödglimmer oder Kieselerden, Carbonaten, insbesondere Calcit, Kreide oder Dolomit, Flußspat, Sulfaten, insbesondere Schwerspat, Oxiden wie Quarzmehl, Hydroxide wie Aluminiumtrihydroxid, Magnesium- oder Calciumhydroxid, synthetischen Füllstoffen wie Acrylathohlkugeln und dergleichen oder deren beliebige Mischungen. Synthetische Füllstoffe sind insbesondere hinsichtlich ihrer Korngröße und Korngrößenverteilung gezielt herstellbar. Zum Beispiel kann in einer Ausführungsform auf calcitische und/oder silikatische Füllstoffe zurückgegriffen werden. Bezogen auf das Gesamtgewicht der erfindungsgemäßen Beschichtungsmassen, insbesondere Dispersionsbeschichtungsmasse, liegen darin bevorzugt 1 bis 50 Gewichtsprozent, bevorzugt 5 bis 40 Gewichtsprozent und besonders bevorzugt 10 bis 35 Gewichtsprozent an Füllstoffen, insbesondere calcitischen und/oder silikatischen Füllstoffen, vor.

Als typisches Pigment wird häufig auf Titandioxid zurückgegriffen, vorzugsweise in der Rutilform. Auch andere Weiß- oder Buntpigmente kommen in Frage, beispielsweise Zinkoxid, Baryt, Ruß oder Graphit. Organische, synthetische Hohlpigmente können ebenfalls eingesetzt werden, z.B. zusammen mit Weißpigmenten eingesetzt. Zum Abtönen kann man auch auf farbige Pigmente, beispielsweise Eisenoxide zurückgreifen. In einer besonders zweckmäßigen Ausführungsform ist vorgesehen, dass die erfindungsgemäßen Beschichtungsmassen, insbesondere Dispersionsbeschichtungsmassen, 0,01 bis 30 Gewichtsprozent, bevorzugt 0,1 bis 25 Gewichtsprozent und besonders bevorzugt 0,2 bis 20 Gewichtsprozent an Pigment, insbesondere Titanoxid, enthalten.

Grundsätzlich können mit den erfindungsgemäßen Beschichtungsmassen, insbesondere Dispersionsbeschichtungsmassen, Füllstoffe und/oder Pigmente in einer Menge gewählt werden, dass eine Pigmentvolumenkonzentration (PVK) im Bereich von 10 bis 90%, bevorzugt im Bereich von 60 bis 90 % und besonders bevorzugt im Bereich von 62 bis 80 % resultiert. Es hat sich überraschend gezeigt, dass sich insbesondere auch bei den so genannten überkritischen Beschichtungsmassen, insbesondere solchen, die für Innenanstriche verwendet werden, die Spritzneigung bei Auftrag mit der Walze signifikant zurückgedrängt werden kann. Bei überkritischen Dispersionsfarben ist die kritische Pigment-Volumen-Konzentration überschritten worden, d.h. diejenige Konzentration, bei der Pigmente und Füllstoffe in der getrockneten Beschichtung gerade noch vom Bindemittel benetzt werden.

Die erfindungsgemäßen Beschichtungsmassen, insbesondere Dispersionsbeschichtungsmassen, können ferner Additive enthalten, ausgewählt aus der Gruppe bestehend aus Entschäumern, Netzmitteln, Dispergiermitteln, Stabilisatoren, Konservierungsmitteln, Hydrophobierungsmitteln, organischen Filmbildehilfsmitteln oder beliebigen Mischungen hiervon.

Auch können in den erfindungsgemäßen Beschichtungsmassen, insbesondere Dispersionsbeschichtungsmassen, ein oder mehrere Farbstoffe enthalten sein.

Selbst solche erfindungsgemäßen Beschichtungsmassen, insbesondere Dispersionsbeschichtungsmassen, mit denen Anstriche, insbesondere Innenanstriche, erhalten werden, die gemäß DIN EN 13300 den Glanzgrad mittlerer Glanz (< 60, Messwert 60°; ≥ 10 Meßwert 85°) matt (< 10 Messwert 85°) oder stumpfmatt (< 5, Messwert 85°) besitzen, zeigen eine signifikant reduzierte Spritzneigung beim Auftrag mit der Walze.

Erfindungsgemäße tropffähige wässrige Beschichtungsmasse, insbesondere Dispersionsbeschichtungsmassen, zeichnen sich auch dadurch aus, dass sie enthalten
a) 1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt)
   oder
   1 bis 10 Gewichtsprozent, bevorzugt 1,5 bis 7 Gewichtsprozent an dem anorganischen Bindemittel (Feststoffgehalt) und maximal 5 Gewichtsprozent an dem organischen Bindemittel (Feststoffgehalt)
   oder

   1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt) und maximal 2,5 Gewichtsprozent an dem anorganischen Bindemittel (Feststoffgehalt),
b) 1 bis 50 Gewichtsprozent, bevorzugt 5 bis 40 Gewichtsprozent und besonders bevorzugt 10 bis 35 Gewichtsprozent, bezogen auf das Gesamtgewicht der Beschichtungsmasse, insbesondere Dispersionsbeschichtungsmasse, an Füllstoffen, insbesondere calcitischen und/oder silikatischen Füllstoffen, und/oder 0,01 bis 30 Gewichtsprozent, bevorzugt 0,1 bis 25 Gewichtsprozent und besonders bevorzugt 0,2 bis 20 Gewichtsprozent, bezogen auf das Gesamtgewicht der Beschichtungsmasse, insbesondere Dispersionsbeschichtungsmasse, an Pigment, insbesondere Titandioxid, und
c) 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker oder 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker oder
   0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, Polysaccharidverdicker oder
   0,01 bis 1 Gewichtsprozent, bevorzugt 0,05 bis 0,8 Gewichtsprozent und besonders bevorzugt 0,1 bis 0,6 Gewichtsprozent, bezogen auf das Gesamtgewicht der Beschichtungsmasse, insbesondere Dispersionsbeschichtungsmasse, an mindestens einem Verdicker auf Schichtsilikatbasis oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker
   oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker
   oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker
   oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und
   0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat oder 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker
   oder
   0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat,
   und
d) Wasser.

Ein spritz- und/oder nebelreduzierter, -armer oder -freier Auftrag von erfindungsgemäßen Beschichtungsmassen, insbesondere Dispersionsbeschichtungsmassen, auf einer Oberfläche mit einer Walze gelingt insbesondere auch dadurch, dass man eine Walze, insbesondere Malerwalze, verwendet, deren Fasern bzw. Florbesatz auf diese Beschichtungsmasse abgestimmt ist. Demgemäß wird die der vorliegenden Erfindung zu Grunde liegende Aufgabe auch gelöst durch einen Kit-of-parts, umfassend eine erfindungsgemäße Beschichtungsmasse, insbesondere Dispersionsbeschichtungsmasse, und eine Walze, insbesondere Malerwalze, umfassend einen Florbesatz, einen Walzenkörper und einen Walzenbügel, wobei der Florbesatz Fasern, insbesondere Polfasern, mit einer durchschnittlichen Faserlänge, insbesondere absoluten Faserlänge, nicht oberhalb von 20 mm, vorzugsweise nicht oberhalb von 15 mm und besonders bevorzugt nicht oberhalb von 10 mm umfasst, und wobei die Fasern vorzugsweise Polyesterfasern, insbesondere PET-Fasern, und Polyamidfasern umfassen, insbesondere miteinander verzwirnte Polyester- und Polyamidfasern, und wobei die Polyesterfasern, insbesondere die PET-Fasern, bevorzugt eine mittlere Feinheit im Bereich von 2,0 bis 5,0 dtex, besonders bevorzugt von 2,5 bis 4,0 und insbesondere im Bereich von 3,0 bis 3,5 dtex, und die Polyamidfasern bevorzugt eine mittlere Feinheit im Bereich von 0,2 bis 1,8 dtex, besonders bevorzugt von 0,4 bis 1,5 dtex und insbesondere von 0,7 bis 1,2 dtex aufweisen.

Die der Erfindung zu Grunde liegende Aufgabe wird des Weiteren gelöst durch eine Prüfvorrichtung zur Bestimmung des Spritzverhaltens von erfindungsgemäßen tropffähigen wässrigen, insbesondere fließfähigen, Beschichtungsmassen, insbesondere Dispersionsbeschichtungsmasse, wie Silikat-, Dispersionssilikat-und Kunststoffdispersionsfarben, umfassend eine speicherprogrammierbare Steuerung, eine vertikale oder aus der Vertikalen geneigte, insbesondere plattenförmige, Unterlage mit einem oberen und einem unteren Ende, beabstandet von der Unterlage, insbesondere gleichmäßig beabstandet, eine Führungsvorrichtung, insbesondere Führungsschiene, zur Aufnahme eines darin beweglichen motorbetriebenen Schlittens, diesen Schlitten enthaltend, eine beweglich gelagerte Verbindungsvorrichtung, insbesondere Steckvorrichtung, zur Aufnahme des Walzenbügels einer Walze, diese in der Verbindungsvorrichtung vorliegende bzw. befestigbare Walze, insbesondere Malerwalze, enthaltend einen Florbesatz, einen Walzenkörper und einen Walzenbügel, einen in Wirkverbindung mit der speicherprogrammierbaren Steuerung stehenden Antrieb, eingerichtet und ausgelegt zur Beförderung des Schlittens in der Führungsvorrichtung, eine horizontale oder aus der horizontalen geneigte Prüfauflage, die in einem Winkel, insbesondere rechtwinklig, an oder in Bezug auf die Unterlage angeordnet ist und am oder benachbart zu dem unteren Ende der Unterlage vorliegt, einen ersten Sensor in Wirkverbindung mit der speicherprogrammierbaren Steuerung, angeordnet und eingerichtet zur Detektion des Schlittens, der Walze und/oder der Verbindungsvorrichtung an einem oberen Umkehrpunkt, und einen zweiten
Sensor in Wirkverbindung mit der speicherprogrammierbaren Steuerung, angeordnet und eingerichtet zur Detektion des Schlittens, der Walze und/oder der Verbindungsvorrichtung an einem unteren Umkehrpunkt. Die Unterlage ist im Sinne der Erfindung im Wesentlichen aus der Vertikalen geneigt, wenn sie in Bezug auf die vertikale Ausrichtung einen Neigungswinkel kleiner 15°, insbesondere kleiner 10° aufweist. Die Prüfauflage ist im Sinne der Erfindung im Wesentlichen aus der Horizontalen geneigt, wenn sie in Bezug auf die horizontale Ausrichtung einen Neigungswinkel kleiner 15°, insbesondere kleiner 10° aufweist.

Um die erfindungsgemäßen Vorrichtung für eine große Zahl an Versuchen verwenden zu können, wird in einer sehr zweckmäßigen Ausgestaltung ferner ein flächiger Prüfkörper, insbesondere einer Gipskartonplatte, eingesetzt, der an der vertikalen oder aus der vertikalen geneigten, insbesondere plattenförmigen, Unterlage anliegt und/oder einen, insbesondere schwarzen, flächigen Testkörper, beispielsweise aus Karton sowie insbesondere in Form einer PVC-Folie, der auf der Prüfauflage aufliegt und der insbesondere an der vertikalen oder aus der vertikalen geneigten, insbesondere plattenförmige, Unterlage oder an dem flächigen Prüfkörper angrenzt. Dieser flächige Testkörper kann sodann für die Beaufschlagung mit der Beschichtungsmasse mittels Malerwalze verwendet und anschließend von der Unterlage abgenommen werden, beispielsweise einer weiteren Analyse unterzogen zu werden. Hierbei kann man die Gleichmäßigkeit des Beschichtungsauftrags, die Vollständigkeit der Bedeckung der Prüffläche sowie das aufgetragene Gewicht der Beschichtungsmasse untersuchen. Der flächige Testkörper verfügt vorzugsweise über eine Farbe, die einen guten Kontrast zu der auf ihr Spritzverhalten getesteten Farbe der Anstrichfarbe zeigt. Bei einer weißen Anstrichfarbe kann z.B. ein schwarzer flächiger Testkörper und bei einer dunklen Anstrichfarbe ein weißer flächiger Testkörper verwendet werden. Auch kann man im Allgemeinen für die Farbe des flächigen Testkörpers eine Farbe verwendet werden, die im Wesentlichen komplementär ist zu der Farbe der zu testenden Anstrichfarbe.

Auch ist es besonders zweckmäßig, wenn die erfindungsgemäße Prüfvorrichtung auch eine Befestigungsvorrichtung, insbesondere Klemmvorrichtung, umfasst, die eingerichtet und ausgelegt ist zur lösbaren Anbringung eines flächigen Prüfkörpers, insbesondere einer Gipskartonplatte, an der vertikalen oder aus der vertikalen geneigten, insbesondere plattenförmigen, Unterlage. Die Länge des flächigen Prüfkörpers liegt üblicherweise im Bereich von 50 bis 300 cm und dass die Breite des flächigen Prüfkörpers im Bereich von 30 bis 100 cm.

Zur weitergehenden Automatisierung und Vergleichmäßigung der Prüfbedingungen hat es sich als vorteilhaft erwiesen, wenn die erfindungsgemäße Prüfvorrichtung ferner einen mit der speicherprogrammierbaren Steuerung in Wechselwirkung stehenden und beabstandet von dem ersten Sensor und in Richtung des zweiten Sensors vorliegenden dritten Sensor, eingerichtet und ausgelegt, um eine Drosselung der Geschwindigkeit des beweglichen Schlittens in Richtung des ersten Sensors (Aufwärtsrichtung) herbeizuführen, und/oder einen mit der speicherprogrammierbaren Steuerung in Wechselwirkung stehenden und beabstandet von dem zweiten Sensor und in Richtung des ersten und gegebenenfalls dritten Sensors vorliegenden vierten Sensor, eingerichtet und ausgelegt, um eine Drosselung der Geschwindigkeit des beweglichen Schlittens in Richtung des zweiten Sensors (Abwärtsrichtung) herbeizuführen, aufweist. Hierdurch wird ermöglicht, dass, sobald der Schlitten von dem dritten Sensor und/oder dem vierten Sensor detektiert wird, dessen Geschwindigkeit gedrosselt werden kann.

Hierbei kann der Antrieb vorzugsweise eingerichtet und ausgelegt sein, um den Schlitten mit einer Hubgeschwindigkeit im Bereich von 0,1 bis 2,0 m/s, bevorzugt im Bereich von 0,2 bis 1,5 m/s, besonders bevorzug 0,4 bis 1,1 m/s zu bewegen.

In einer bevorzugten Ausgestaltung umfasst die erfindungsgemäße Prüfvorrichtung ferner mindestens einen Kraftaufnehmer zur, insbesondere kontinuierlichen, Messung des Anpressdrucks der Walze an die Unterlage oder insbesondere an den auf der Unterlage anliegenden flächigen Prüfkörper.

Die Prüfvorrichtung kann dabei derart eingestellt werden, dass der Anpressdruck der in der beweglich gelagerten Verbindungsvorrichtung vorliegenden Walze an die Unterlage, insbesondere an den auf der Unterlage anliegenden flächigen Prüfkörper, im Bereich 25 N bis 45 N, vorzugsweise im Bereich von 30 N bis 40 N, liegt oder auf einen Wert im Bereich von 25 N bis 45 N, vorzugsweise im Bereich von 30 N bis 40 N einstellbar ist.

Besonders zweckmäßig sind auch solche erfindungsgemäßen Prüfvorrichtungen, bei denen die Aufnahmevorrichtung für den Walzenbügel in mindestens einer, insbesondere mindestens zwei Achsen beweglich gelagert ist. Hierbei kann die Aufnahmevorrichtung für den Walzenbügel eine Federarmaufhängung umfassen.

Mit der erfindungsgemäßen Prüfvorrichtung kommt insbesondere eine solche Walze, insbesondere Malerwalze, zum Einsatz, die über einen Faserflor mit Fasern mit einer durchschnittlichen Faserlänge, insbesondere absoluten Faserlänge, nicht oberhalb von 20 mm, vorzugsweise nicht oberhalb von 15 mm und besonders bevorzugt nicht oberhalb von 10 mm verfügt. Geeignete Fasern umfassen zum Beispiel Polyamidfasern, Polyesterfasern, Policarbonatfasern, Polyvinylchloridfasern oder deren beliebige Mischung. Hierbei ist ein solcher Faserflor bzw. Florbesatz besonders geeignet, der sowohl Polyesterfasern, insbesondere PET-Fasern, als auch Polyamidfasern umfasst. Polyester- und Polyamidfasern liegen hierbei vorzugsweise miteinander verzwirnt vor. Die Fasern, insbesondere auch die verzwirnten Fasern, stellen hierbei bevorzugt sogenannte Polfasern dar, die vorzugsweise auf Endlosfasern zurückgehen. Während die Polyesterfasern, insbesondere die PET-Fasern, bevorzugt über eine mittlere Feinheit im Bereich von 2,0 bis 5,0 dtex, besonders bevorzugt von 2,5 bis 4,0 und insbesondere von 3,0 bis 3,5 dtex aufweisen, greift man für Polyamidfasern bevorzugt auf solche mit einer mittleren Feinheit im Bereich von 0,2 bis 1,8 dtex, besonders bevorzugt von 0,4 bis 1,5 dtex und insbesondere von 0,7 bis 1,2 dtex zurück. Die Ermittlung der Feinheit ergibt zum Beispiel für ein Faserbündel von 100 Fasern mit einer Schnittlänge von 100 mm, also einer Gesamtfaserlänge von 10 000 mm, und mit einem Gewicht von 1,7 mg eine durchschnittliche Feinheit der Fasern von 1,7 dtex. Die Bestimmung der Feinheit basiert auf DIN 53 830 Teil 3.

Die Breite geeigneter Walzen liegt üblicherweise im Bereich von 10 bis 40 cm, insbesondere im Bereich von 20 bis 30 cm. Der Kemdurchmesser der Walze (ohne Berücksichtigung des Walzenflors) liegt im Allgemeinen im Bereich von 40 bis 80 mm, insbesondere im Bereich von 50 bis 70 mm.

Mit der erfindungsgemäßen Prüfvorrichtung gelingt die zuverlässige und wiederholbare Bestimmung des Spritzverhaltens einer fließfähigen Beschichtungsmasse, insbesondere der erfindungsgemäßen Beschichtungsmasse, beim Auftrag auf eine Unterlage mit einer Walze enthaltend einen Walzenflor.

Die der Erfindung zu Grunde liegende Aufgabe wird des Weiteren gelöst durch ein Verfahren zur Bestimmung des Spritzverhaltens beim Auftragen von, insbesondere fließfähigen, erfindungsgemäßen Beschichtungsmassen, insbesondere Dispersionsbeschichtungsmasse, wie Silikat-, Dispersionssilikat- und Kunststoffdispersionsfarben, mit einer Walze, umfassend
- Zurverfügungstellung einer erfindungsgemäßen Prüfvorrichtung,
- Anbringen eines flächigen Prüfkörpers, insbesondere einer Gipskartonplatte, auf der vertikalen oder auf der aus der Vertikalen geneigten Unterlage,
- Aufbringungen eines, insbesondere schwarzen, flächigen Testkörpers auf der Prüfauflage,
- Einstellen des Anpressdrucks der Walze,
- Einstellen der Hubgeschwindigkeit des Schlittens,
- Einarbeiten der tropffähigen wässrigen, insbesondere fließfähigen Beschichtungsmasse in den Florbesatz der Walze,
- Befestigung des Walzenbügels in der Verbindungsvorrichtung,
- Starten der Hubbewegung des Schlittens unter Applikation der Beschichungsmasse über die Walze auf den flächigen Prüfkörper,
- Stoppen der Hubbewegung des Schlittens nach mindestens zwei, insbesondere drei bis sechs, vollständigen Aufwärts- und mindestens zwei, insbesondere drei bis sechs, vollständigen Abwärtsbewegungen,
- Entnahme des flächigen Testkörpers und Bestimmung des Gewichts des Testkörpers und
- Ermittlung der Differenz zwischen dem Gewicht des Testkörpers nach der Applikation der Beschichtungsmasse und vor der Applikation der Beschichtungsmasse oder,
- insbesondere Computer-gestützte, optische Bestimmung der Menge und gegebenenfalls der Größe der Spritzer der Beschichtungsmasse auf dem Testkörper.

Bei dem erfindungsgemäßen Verfahren wird die Walze bevorzugt mit einem Anpressdruck im Bereich von 20 N bis 50 N, insbesondere im Bereich von 30 N bis 40 N, mittels des Schlittens entlang des flächigen Prüfkörpers geführt. Die Teststrecke, über die die Walze mittels des Schlittens geführt wird, verfügt in der Regel über eine Länge in einem Bereich von 1 m bis 3 m, insbesondere im Bereich von 1,5 m bis 2 m.

Es hat sich als zweckmäßig erwiesen, für die Bestimmung der Größe und der Anzahl der Nutzer auf einen, insbesondere schwarzen, flächigen Testkörper zurückzugreifen, der über eine rechteckige Grundform mit einer Kantenlänge im Bereich von 20 cm bis 60 cm, insbesondere im Bereich von 25 cm bis 50 cm, verfügt.

Um reproduzierbare Testergebnisse zu erhalten, wird gemäß einer Ausführungsform die fließfähige Beschichtungsmasse in der Weise in den Florbesatz eingearbeitet, dass der Walzenkörper bis maximal etwa zu einem Drittel in die Beschichtungsmasse getaucht und anschließend mit rollenden Bewegungen an einem Abstreifgitter abgestrichen wird, wobei dieser Vorgang solange wiederholt wird, bis der Florbesatz der Walze im Wesentlichen gleichmäßig mit der Beschichtungsmasse versehen ist. Anschließend kann die derart präparierte Walze über den Walzenbügel an der beweglich gelagerten Verbindungsvorrichtung des Schlittens befestigt werden.

Bei dem erfindungsgemäßen Verfahren wird im Allgemeinen zweckmäßigerweise mit dem Auftrag der Beschichtungsmasse mit der Walze in etwa in der Mitte der Prüfstrecke begonnen.

Der Anpressdruck wird bevorzugt in der Weise eingestellt, dass der Walzenkörper über mindestens 90% der gesamten Prüfstrecke, insbesondere innerhalb der mittleren 90 Prozent der Prüfstrecke, rotiert. Der Walzenkörper kann zum Beispiel dann nicht rotieren, wenn der Anpressdruck zu hoch oder wenn dieser zu niedrig eingestellt ist. Zur Herbeiführung möglichst vergleichbarer Testbedingungen hatte sich als zweckmäßig erwiesen, dass die Zeitdauer zwischen dem Abrollen der Walze am Abstreifgitter und dem Start der Walzenbewegung mittels des Schlittens nicht mehr als zwei Minuten betragen darf.

Weitere Merkmale und Vorteile der Erfindung ergeben sich aus der nachfolgenden Beschreibung in der Ausführungsbeispiele der Erfindung anhand einer schematischen Zeichnung beispielhaft erläutert wird, ohne dadurch die Erfindung zu beschränken. Dabei zeigt:

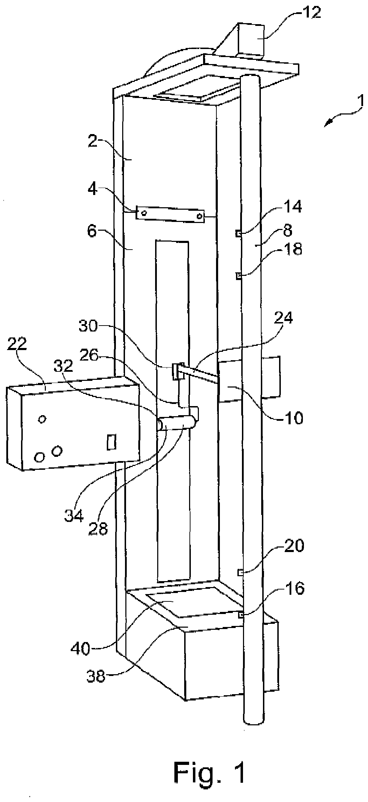

- Figur 1: eine schematische Darstellung der erfindungsgemäßen Prüfvorrichtung.

Bei der erfindungsgemäßen Prüfvorrichtung 1 liegt in der dargestellten Ausführungsform die Unterlage 2 in vertikaler Ausrichtung vor. An der Unterlage 2 ist mithilfe einer Klemmvorrichtung 4 eine Prüffläche 6 in Form einer Gipskartonplatte angebracht. Gleichmäßig beanstandet von der Unterlage 2 liegt eine Führungsschienen 8 vor, in der ein Schlitten 10 vertikal verfahrbar gelagert ist. Der Schlitten 10 steht mit einem motorgetriebenen Antrieb 12 in Verbindung und wird über diesen in der Führungsschiene 8 bewegt. Ein erster Sensor 14 ist im oberen Bereich der Führungsschiene 8 angebracht unter detektiert den oberen Umkehrpunkt des Schlittens 10. Ein zweiter Sensor 16 im unteren Bereich der Führungsschiene 8 vor und detektiert den unteren Umkehrpunkt des Schlittens 10. Benachbart zum ersten Sensor 14 befindet sich ein dritter Sensor 18. Mithilfe dieses dritten Sensors 18 kann eine Drosselung der Geschwindigkeit des Schlittens in Richtung des oberen Umkehrpunktes, das heißt des ersten Sensors 14 bewerkstelligt werden. In gleicher Weise liegt benachbart zum zweiten Sensor 16 ein vierter Sensor 20 vor, der ebenfalls dafür vorgesehen ist, eine Drosselung der Geschwindigkeit der Schlittens 10 in Richtung des unteren Umkehrpunktes zu bewirken. Die ersten, zweiten, dritten und vierten Sensoren stehen in Wirkverbindung mit einer speicherprogrammierbaren Steuerung 22. Der Schlitten 10 ist mit einer Verbindungsvorrichtung 24, die für die Aufnahme des Walzenbügels 26 einer Walze 28 vorgesehen ist, verbunden. Die Verbindungsvorrichtung 24 enthält eine beweglich gelagerte Steck- bzw. Befestigungsvorrichtung 30, die den Walzenbügel bzw. den Griffabschnitt des Walzenbügels hält. Die Walze 28 verfügt über einen Walzenkörper 32, der einen Florbesatz 34 aufweist. Diese in der Verbindungsvorrichtung vorliegende bzw. befestigbare Walze 28, insbesondere Malerwalze, enthaltend einen Florbesatz 34, einen Walzenkörper 36 und einen Walzenbügel 26 wird über die Bewegung des Schlittens 10 entlang der Prüffläche 6 geführt. Ein vollständiger Hub umfasst hierbei die von der Walze zwischen dem ersten und dem zweiten Sensor zurückgelegte Strecke. Diese Prüfstrecke kann sich zum Beispiel über eine Länge von zwei Metern erstrecken. Mithilfe des Antriebs kann zum Beispiel eine steuerbare Geschwindigkeit im Bereich von 0,1 m/s bis 2 m/s eingestellt werden. Geeignete Hubgeschwindigkeiten liegen üblicherweise im Bereich von 0,5 m/s bis 1,5 m/s. Zwar kann die Startposition variabel gestaltet werden, allerdings ist es häufig zweckmäßig, mit dem Farbauftrag in der Mitte der Prüfstrecke zu beginnen. Unterhalb dieser Prüffläche 6 ist eine Prüfauflage 38 mit einer horizontalen Auflagefläche vorgesehen, auf der ein flächiger Prüfkörper 40 in Form einer schwarzen PVC-Folie auffliegt. Dieser Prüfkörper kann zum Beispiel eine Länge von 43 cm und eine Breite von ca. 28 m aufweisen. Die erfindungsgemäßen Prüfvorrichtung 1 kann ferner mindestens einen Kraftaufnehmer zur, insbesondere kontinuierlichen, Messung des Anpressdrucks der Walze an die Unterlage 2 oder insbesondere an den auf der Unterlage anliegenden flächigen Prüfkörper 6 enthalten. Der Anpressdruck der Walze liegt in der dargestellten Prüfvorrichtung vorzugsweise im Bereich von 35 N ± 5 N. Auch kann mit der dargestellten Vorrichtung zwischen dem dritten und dem ersten Sensor und dem vierten und dem zweiten Sensor mithilfe einer Rampenfunktion die Geschwindigkeiten bis zu den jeweiligen Umkehrpunkten gedrosselt werden. Die Breite der Walze beträgt regelmäßig 250 mm. Die Walze bzw. der Florbesatz der Walze wird zweckmäßigerweise mit einer weißen Farbe getränkt. Die Versuchsdurchführung findet typischerweise bei Raumtemperatur statt. Hierbei wird die Walze bzw. der mit Florbesatz versehene Walzenkörper zu einem Drittel des Durchmessers in ein Gebinde eingetaucht enthaltend die erfindungsgemäße Beschichtungsmasse in Form einer weißen Kunststoffdispersionsfarbe und anschließend mit einer rollenden Bewegung an einem Absperrgitter abgestriffen. Dieser Vorgang wird solange wiederholt, bis der Florbesatz gleichmäßig mit Farbe getränkt ist. Mittels rollender Hubbewegungen wird die in den Florbesatz der Walze eingetragene Farbe manuell auf einer Gipskartonplatte verteilt, bis keine deckende Farbabgabe mehr gelingt. Der geschilderte Vorgang der Farbaufnahme und des manuellen Abrollens der in den Florbesatz eingearbeiteten Farbe wird mindestens dreimal wiederholt. Auf diese Weise gelingt es, dass auch die innenliegenden Bereiche des Florbesatzes mit Farbe benetzt sind.

Ob der Florbesatz der Walze hinreichend mit Farbe getränkt ist, kann anhand einer Massebestimmung, wie nachfolgend erläutert, festgestellt werden. Hierfür ist die Walze inklusive Haltebügel auf einem Stativ auf einer Waage derart anzubringen, dass die Achse der Walze im Wesentlichen horizontal verläuft und Masseverluste durch Abtropfen nicht von der Waage erfasst werden. Es wird jeweils die Gesamtbeladung der Walze vor Applikation und die Rückwaage nach Applikation der Farbe beim Einrollen auf die Gipskartonplatte auf einer definierten Fläche bestimmt. Die Differenz vor und nach dem Einrollen ergibt die Farbabgabe. Aus der Differenz zwischen Rückwaage nach dem Einrollen und der nachfolgenden Beladung ergibt sich als Kenngröße die inkrementelle Farbaufnahme. Sodann ist frühestens nach mindestens dreimaligem Einrollen zu bestimmen, ab welcher inkrementeller Farbaufnahme die Beschichtungsmasse innerhalb von 30 Sekunden von der Walze abtropft. Die derart bestimmte Masse ist als maximale inkrementelle Farbaufnahme zu verwenden, falls innerhalb von 30 Sekunden mindestens ein Tropfen, jedoch nicht mehr als fünf Tropfen oder nicht mehr als 0,5 g Beschichtungsmasse abtropfen. Die Walze kann als ausreichend eingerollt angesehen werden, wenn die Differenzen zwischen inkrementeller Farbaufnahme, nachfolgender Farbabgabe und der darauf folgenden inkrementellen Farbaufgabe sich auf höchstens 25 g eingependelt haben (diese Werte beziehen sich auf eine Walze mit einem Walzenkörper, der über eine Breite von 250 mm verfügt und wobei der Farbauftrag über eine Prüfstrecke mit einer Länge von 1840 mm erfolgt). Eine mit der Beschichtungsmasse derart beladene Walze kann dann für die Untersuchung des Spritzverhaltens mithilfe der Prüfvorrichtung verwendet werden, wenn
- die inkrementelle Farbaufnahme mindestens 80 Prozent der maximalen, inkrementellen Farbaufnahme beträgt,
- die Differenz zwischen inkrementeller Farbaufnahme und Farbabgabe höchstens 25 g beträgt,
- kein Abtropfen von der Walze innerhalb der Zeit bis zum Start der Prüfvorrichtung stattfindet,
- die Walze innerhalb der mittleren 90 Prozent der Prüfstrecke stets rotiert, wobei kurzzeitige Blockaden der Walzenrotation an den Umkehrpunkten unschädlich sind,
- der auf der Prüffläche aufgetragene Beschichtungsfilm innerhalb einer Breite von ca. 80 Prozent der Walze und einer Breite von 90 Prozent der Prüfstrecke keine Fehlstellen zeigt,
- die Zeitspanne zwischen dem letzten Abrollen am Abstreifgitter und dem Start der Walzenbewegung an der Prüfvorrichtung unter zwei Minuten liegt und
- vergleichbare Umgebungsbedingungen hinsichtlich Raumtemperatur und Luftfeuchte für sämtliche Messungen eingehalten werden.

Es hat sich gezeigt, dass es regelmäßig ausreicht, mit der an dem Schlitten befestigten Walze sechs vollständige Hübe zu fahren, d.h. sechs Aufwärts- plus sechs Abwärtsbewegungen über die gesamte Prüfstrecke, um zu reproduzierbaren Ergebnissen zu gelangen. Anschließend kann der flächige Prüfkörper in Form einer schwarzen PVC-Folie entfernt und auf Spritzer untersucht werden. Für die Bewertung der Spritztendenz einer Beschichtungsmasse kann zum Beispiel ein gravimetrisches Verfahren zum Einsatz kommen. Hierbei wird das Gewicht des flächigen Prüfkörpers vor und nach der Applikation bestimmt. Alternativ oder zusätzlich kann eine visuelle Prüfung erfolgen. Besonders zuverlässig ist auch eine computergestützte Analyse. Hierbei wird eine digitale Aufnahme des flächigen Prüfkörpers vor und nach der Applikation angefertigt. Die für die jeweiligen Aufnahmen benötigten Dateigrößen können sodann voneinander abgezogen werden. Hierbei kann der Scanvorgang der Aufnahmen bei einer Auflösung von 300 dpi erfolgen.

Die in der voranstehenden Beschreibung, den Ansprüchen und den Zeichnungen offenbarten Merkmale der Erfindung können sowohl einzeln als auch in jeder beliebigen Kombination für die Verwirklichung der Erfindung vorteilhaft sein.

## Patentansprüche

1. Tropffähige wässrige Beschichtungsmasse, insbesondere Dispersionsbeschichtungsmasse, enthaltend
mindestens ein anorganisches, in Wasser lösliches Bindemittel oder mindestens ein organisches, insbesondere in Wasser dispergiertes oder dispergierbares oder in Wasser emulgierbares oder emulgiertes, Bindemittel,
mindestens einen Füllstoff und/oder mindestens ein Pigment,
mindestens einen Verdicker, ausgewählt aus der Gruppe bestehend aus Polyurethanverdickern, Acrylatverdickern, Polyether-Polyol-Verdickern, Verdickern auf Polysaccharidbasis, Schichtsilikaten und organisch modifizierten Schichtsilikaten oder deren beliebige Mischungen, und
Wasser,
**dadurch gekennzeichnet, dass**
die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ, aufweist,
die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und/oder
die über eine über den Bereich der Schergeschwindigkeiten γ̇ von 10 bis 150 s⁻¹ ermittelte mittlere Steigung im Bereich von 1,2 bis 5, vorzugsweise im Bereich von 1,5 bis 4 und besonders bevorzugt im Bereich von 1,5 bis 3,5 Pa·s verfügt und/oder die über eine über den Bereich der Schergeschwindigkeiten γ̇ von 10 bis 300 s⁻¹ ermittelte mittlere Steigung im Bereich von 0,85 bis 3,5, bevorzugt von 0,9 bis 3 und besonders bevorzugt von 1,0 bis 2,5 Pa·s verfügt und/oder
die über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt und/oder dass die für die Beschichtungsmasse, insbesondere Dispersionsbeschichtungsmasse, ermittelte maximale Schubspannung τₘₐₓ oder dass die bei einer Schergeschwindigkeit γ̇ von 1500 s⁻¹ ermittelte Schubspannung τ größer oder gleich 650 Pa, bevorzugt größer oder gleich 700 Pa, ist und/oder dass die Schergeschwindigkeit γ̇ bei 50% der maximalen Schubspannung τₘₐₓ oder die Schergeschwindigkeit γ̇ bei 50 % der Schubspannung τ, die sich bei einer Schergeschwindigkeit von 1500 s⁻¹ einstellt, nicht oberhalb von 200 s⁻¹, bevorzugt nicht oberhalb von 180 s⁻¹ und besonders bevorzugt nicht oberhalb von 150 s⁻¹ liegt.

2. Tropffähige wässrige Beschichtungsmasse nach Anspruch 1, enthaltend
a)
1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt)
oder
1 bis 10 Gewichtsprozent, bevorzugt 1,5 bis 7 Gewichtsprozent an dem anorganischen Bindemittel (Feststoffgehalt) und maximal 5 Gewichtsprozent an dem organischen Bindemittel (Feststoffgehalt)
oder
1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt) und maximal 2,5 Gewichtsprozent an dem anorganischen Bindemittel (Feststoffgehalt),
b)
1 bis 50 Gewichtsprozent, bevorzugt 5 bis 40 Gewichtsprozent und besonders bevorzugt 10 bis 35 Gewichtsprozent, bezogen auf das Gesamtgewicht der Beschichtungsmasse, insbesondere Dispersionsbeschichtungsmasse, an Füllstoffen, insbesondere calcitischen und/oder silikatischen Füllstoffen, und/oder 0,01 bis 30 Gewichtsprozent, bevorzugt 0,1 bis 25 Gewichtsprozent und besonders bevorzugt 0,2 bis 20 Gewichtsprozent, bezogen auf das Gesamtgewicht der Beschichtungsmasse, insbesondere Dispersionsbeschichtungsmasse, an Pigment, insbesondere Titandioxid, und
c)
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker oder
0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, Polysaccharidverdicker oder
0,01 bis 1 Gewichtsprozent, bevorzugt 0,05 bis 0,8 Gewichtsprozent und besonders bevorzugt 0,1 bis 0,6 Gewichtsprozent, bezogen auf das Gesamtgewicht der Beschichtungsmasse, insbesondere Dispersionsbeschichtungsmasse, an mindestens einem Verdicker auf Schichtsilikatbasis oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Acrylatverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyurethanverdicker und 0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Polysaccharidverdicker
oder
0,1 bis 5 Gewichtsprozent, bevorzugt 0,5 bis 4 Gewichtsprozent und besonders bevorzugt 0,7 bis 3 Gewichtsprozent, bezogen auf das Gesamtgewicht der Beschichtungsmasse, insbesondere Dispersionsbeschichtungsmasse, an mindestens einem Polyether-Polyol-Verdicker und 0,001 bis 1 Gewichtsprozent, bevorzugt 0,01 bis 0,5 Gewichtsprozent und besonders bevorzugt 0,02 bis 0,3 Gewichtsprozent, bezogen auf das Gesamtgewicht der Beschichtungsmasse, insbesondere Dispersionsbeschichtungsmasse, an mindestens einem Schichtsilikat,
und
d)
Wasser.

3. Beschichtungsmasse nach Anspruch 1 oder 2, **dadurch gekennzeichnet, dass** das Bindemittel ein anorganisches Bindemittel, insbesondere Wasserglas, oder ein organisches Bindemittel auf Basis mindestens eines in Wasser dispergierten oder dispergierbaren Polymers, wobei die in Wasser dispergierten oder dispergierbaren Polymere gebildet sind aus gleichen oder verschiedenen Monomeren, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt oder wobei das organisches Bindemittel Vinylacetat/Ethylen-Copolymere, Copolymere auf Basis von Vinylaromaten, insbesondere Styrol, und Acrylaten oder auf Basis von Reinacrylaten oder dass das organische Bindemittel Siliconharze umfasst oder darstellt,oder ein organisches Bindemittel auf Basis mindestens eines in Wasser emulgierbaren oder emulgierten Polymers, insbesondere eines Siliconharzes, darstellt.

4. Beschichtungsmasse nach einem der vorangehend genannten Ansprüche, enthaltend, bezogen auf das Gesamtgewicht der Beschichtungsmasse, insbesondere Dispersionsbeschichtungsmasse,
1 bis 20 Gewichtsprozent, bevorzugt 2 bis 15 Gewichtsprozent und besonders bevorzugt 3 bis 12,5 Gewichtsprozent an dem organischen Bindemittel (Feststoffgehalt), insbesondere soweit Kunststoffdispersionsfarben und Dispersionssilikatfarben betroffen sind, oder
1 bis 25 Gewichtsprozent, bevorzugt 1,5 bis 20 Gewichtsprozent und besonders bevorzugt 3 bis 15 Gewichtsprozent an dem organischen Bindemittel (Feststoffgehalt), insbesondere soweit Siliconharzfarben betroffen sind, oder
0,1 bis 10,0 Gewichtsprozent, bevorzugt 0,5 bis 7,0 Gewichtsprozent und besonders bevorzugt 0,7 bis 2,5 Gewichtsprozent an dem anorganischen Bindemittel (Feststoffgehalt), insbesondere soweit Silikatfarben und Dispersionssilikatfarben betroffen sind.

5. Beschichtungsmasse nach einem der vorangehend genannten Ansprüche, **dadurch gekennzeichnet, dass**
der mindestens eine Verdicker
ein Acrylatverdicker, insbesondere in einer Menge, bezogen auf das Gesamtgewicht der Beschichtungsmasse, insbesondere Dispersionsbeschichtungsmasse, von 0,5 bis 4 Gewichtsprozent, oder
ein Polyurethanverdicker, insbesondere in einer Menge, bezogen auf das Gesamtgewicht der Beschichtungsmasse, insbesondere Dispersionsbeschichtungsmasse, von 0,2 bis 5 Gewichtsprozent, oder
ein Polyether-Polyol-Verdicker, insbesondere in einer Menge, bezogen auf das Gesamtgewicht der Beschichtungsmasse, insbesondere Dispersionsbeschichtungsmasse, 0,2 bis 5 Gewichtsprozent, oder
ein Verdicker auf Polysaccharidbasis, insbesondere in einer Menge, bezogen auf das Gesamtgewicht der Beschichtungsmasse, insbesondere Dispersionsbeschichtungsmasse, von 0,01 bis 1 Gewichtsprozent, oder
ein Schichtsilikat-Verdicker, insbesondere in einer Menge, bezogen auf das Gesamtgewicht der Beschichtungsmasse, insbesondere Dispersionsbeschichtungsmasse, von 0,01 bis 0,5 Gewichtsprozent, ist oder dass
der Verdicker eine Mischung aus mindestens zwei Verdickern, ausgewählt aus der Gruppe bestehend aus Polyurethanverdickern, Acrylatverdickern, Polyether-Polyol-Verdickern, Verdickern auf Polysaccharidbasis, Schichtsilikaten und organisch modifizierten Schichtsilikaten umfasst, insbesondere eine Mischung aus mindestens einem Acrylatverdicker und mindestens einem Verdicker auf Polysaccharidbasis oder eine Mischung aus mindestens einem Polyurethanverdicker und mindestens einem Verdicker auf Polysaccharidbasis.

6. Beschichtungsmasse nach einem der vorangehend genannten Ansprüche, **dadurch gekennzeichnet, dass**
der Polyurethanverdicker mindestens einen HEUR-Verdicker (hydrophobically modified ethoxilated urethane) oder dass
der Acrylatverdicker mindestens einen HASE-Verdicker (hydrophobically modified alkali soluble emulsion), insbesondere auf Basis von Copolymeren enthaltend oder bestehend aus Methylmethacrylat und Ethylacrylat, umfasst, wobei dieser Acrylatverdicker, insbesondere der HASE-Acrylatverdicker, insbesondere ein zahlenmittleres Molekulargewicht Mₙ im Bereich von 100 bis 300 kDa, bevorzugt im Bereich von 150 bis 250 kDa, und/oder ein gewichtsmittleres Molekulargewicht Mₙ im Bereich von 400 bis 800 kDa, bevorzugt im Bereich von 500 bis 700 kDa, aufweist.

7. Beschichtungsmasse nach einem der vorangehend genannten Ansprüche, **dadurch gekennzeichnet, dass**
die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ aufweist,
die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt
und
die über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt, und/oder dass
die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ aufweist,
die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt
und
die über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt
und
dass die Schergeschwindigkeit γ̇ bei 50% der maximalen Schubspannung τₘₐₓ oder die Schergeschwindigkeit γ̇ bei 50 % der Schubspannung τ, die sich bei einer Schergeschwindigkeit von 1500 s⁻¹ einstellt, nicht oberhalb von 200 s⁻¹, bevorzugt nicht oberhalb von 180 s⁻¹ und besonders bevorzugt nicht oberhalb von 150 s⁻¹ liegt,
und/oder dass
die Beschichtungsmasse, insbesondere Dispersionsbeschichtungsmasse, eine Fließkurve, gebildet aus den auf der Abszisse aufgetragenen Schergeschwindigkeiten γ̇ und den auf der Ordinate aufgetragenen korrespondierenden Schubspannungswerten τ aufweist,
die über eine über den Bereich der Schergeschwindigkeiten γ̇ von 10 bis 75 s⁻¹ ermittelte mittlere Steigung im Bereich von 1,5 bis 7, vorzugsweise im Bereich von 1,8 bis 6 und besonders bevorzugt von 2 bis 5,5 Pa·s verfügt und
die über eine über den Bereich der Schergeschwindigkeiten γ̇ von 1200 bis 1500 s⁻¹ ermittelte mittlere Steigung kleiner oder gleich 0,1, vorzugsweise kleiner oder gleich 0,08 und besonders bevorzugt kleiner oder gleich 0,05 Pa·s verfügt
und
dass die für die Beschichtungsmasse, insbesondere Dispersionsbeschichtungsmasse, ermittelte maximale Schubspannung τₘₐₓ oder dass die bei einer Schergeschwindigkeit γ̇ von 1500 s⁻¹ ermittelte Schubspannung τ größer oder gleich 650 Pa, bevorzugt größer oder gleich 700 Pa, ist.

8. Anstrich erhalten mit der Beschichtungsmasse, insbesondere Dispersionsbeschichtungsmasse, nach einem der vorangehenden Ansprüche.

9. Verwendung der Beschichtungsmasse, insbesondere Dispersionsbeschichtungsmasse, nach einem der Ansprüche 1 bis 7 für den spritz- und/oder nebelreduzierten, -armen oder -freien Auftrag auf eine Oberfläche mit einer Malerwalze und/oder als spritz- oder nebelarme oder spritz- oder nebelfreie Silikatfarbe, Dispersionssilikatfarbe, Siliconharzfarbe oder Kunststoffdispersionsfarbe.

10. Kit-of-parts, umfassend eine Beschichtungsmasse nach einem der Ansprüche 1 bis 7 und eine Walze, insbesondere Malerwalze, umfassend einen Florbesatz, einen Walzenkörper und einen Walzenbügel, wobei der Florbesatz Fasern, insbesondere Polfasern, mit einer durchschnittlichen Faserlänge, insbesondere absoluten Faserlänge, nicht oberhalb von 20 mm, vorzugsweise nicht oberhalb von 15 mm und besonders bevorzugt nicht oberhalb von 10 mm umfasst, und wobei die Fasern insbesondere Polyesterfasern, insbesondere PET-Fasern, und Polyamidfasern umfassen, insbesondere miteinander verzwirnte Polyester- und Polyamidfasern, und wobei die Polyesterfasern, insbesondere die PET-Fasern, bevorzugt eine mittlere Feinheit im Bereich von 2,0 bis 5,0 dtex, besonders bevorzugt von 2,5 bis 4,0 und insbesondere im Bereich von 3,0 bis 3,5 dtex, und die Polyamidfasern bevorzugt eine mittlere Feinheit im Bereich von 0,2 bis 1,8 dtex, besonders bevorzugt von 0,4 bis 1,5 dtex und insbesondere von 0,7 bis 1,2 dtex aufweisen.

11. Prüfvorrichtung zur Bestimmung des Spritzverhaltens von, insbesondere fließfähigen, Beschichtungsmassen nach einem der Ansprüche 1 bis 7, umfassend eine speicherprogrammierbare Steuerung,
eine vertikale oder aus der Vertikalen geneigte, insbesondere plattenförmige, Unterlage mit einem oberen und einem unteren Ende,
beabstandet von der Unterlage, insbesondere gleichmäßig beabstandet, eine Führungsvorrichtung, insbesondere Führungsschiene, zur Aufnahme eines darin beweglichen motorbetriebenen Schlittens,
diesen Schlitten,
eine beweglich gelagerte, mit dem Schlitten verbindbare oder verbundene Verbindungsvorrichtung, insbesondere Steckvorrichtung, zur Aufnahme des Walzenbügels einer Walze,
diese in der Verbindungsvorrichtung vorliegende bzw. befestigbare Walze, insbesondere Malerwalze, enthaltend einen Florbesatz, einen Walzenkörper und einen Walzenbügel,
einen in Wirkverbindung mit der speicherprogrammierbaren Steuerung stehenden Antrieb, eingerichtet und ausgelegt zur Beförderung des Schlittens in der Führungsvorrichtung,
eine horizontale oder aus der horizontalen geneigte Prüfauflage, die in einem Winkel, insbesondere rechtwinklig, an oder in Bezug auf die Unterlage angeordnet ist und am oder benachbart zu dem unteren Ende der Unterlage vorliegt,
einen ersten Sensor in Wirkverbindung mit der speicherprogrammierbaren Steuerung, angeordnet und eingerichtet zur Detektion des Schlittens, der Walze und/oder der Verbindungsvorrichtung an einem oberen Umkehrpunkt, und
einen zweiten Sensor in Wirkverbindung mit der speicherprogrammierbaren Steuerung, angeordnet und eingerichtet zur Detektion des Schlittens, der Walze und/oder der Verbindungsvorrichtung an einem unteren Umkehrpunkt.

12. Vorrichtung nach Anspruch 11, ferner umfassend
einen flächigen Prüfkörper, insbesondere einer Gipskartonplatte, der an der vertikalen oder aus der vertikalen geneigten, insbesondere plattenförmigen, Unterlage anliegt und/oder einen, insbesondere schwarzen, flächigen Testkörper, der auf der Prüfauflage aufliegt und der insbesondere an der vertikalen oder aus der vertikalen geneigten, insbesondere plattenförmige, Unterlage oder an dem flächigen Prüfkörper angrenzt,
und/oder ferner umfassend
eine Befestigungsvorrichtung, insbesondere Klemmvorrichtung, eingerichtet und ausgelegt zur lösbaren Anbringung eines flächigen Prüfkörpers, insbesondere einer Gipskartonplatte, an der vertikalen oder aus der vertikalen geneigten, insbesondere plattenförmigen, Unterlage,
und/oder ferner umfassend
einen mit der speicherprogrammierbaren Steuerung in Wechselwirkung stehenden und beabstandet von dem ersten Sensor und in Richtung des zweiten Sensors vorliegenden dritten Sensor, eingerichtet und ausgelegt, um eine Drosselung der Geschwindigkeit des beweglichen Schlittens in Richtung des ersten Sensors (Aufwärtsrichtung) herbeizuführen
und/oder ferner umfassend einen mit der speicherprogrammierbaren Steuerung in Wechselwirkung stehenden und beabstandet von dem zweiten Sensor und in Richtung des ersten und gegebenenfalls dritten Sensors vorliegenden vierten Sensor, eingerichtet und ausgelegt, um eine Drosselung der Geschwindigkeit des beweglichen Schlittens in Richtung des zweiten Sensors (Abwärtsrichtung) herbeizuführen,
und/oder
ferner umfassend
einen Kraftaufnehmer zur, insbesondere kontinuierlichen, Messung des Anpressdrucks der Walze an die Unterlage oder insbesondere an den auf der Unterlage anliegenden flächigen Prüfkörper, wobei der Anpressdruck der in der beweglich gelagerten Verbindungsvorrichtung vorliegenden Walze an die Unterlage, insbesondere an den auf der Unterlage anliegenden flächigen Prüfkörper, insbesondere im Bereich 25 N bis 45 N, vorzugsweise im Bereich von 30 N bis 40 N, liegt oder insbesondere auf einen Wert im Bereich von 25 N bis 45 N, vorzugsweise im Bereich von 30 N bis 40 N einstellbar ist.

13. Vorrichtung nach Anspruch 11 oder 12, **dadurch gekennzeichnet, dass** die Walze einen Faserflor mit Fasern, insbesondere Polfasern, mit einer durchschnittlichen Faserlänge, insbesondere absoluten Faserlänge, nicht oberhalb von 20 mm, vorzugsweise nicht oberhalb von 15 mm und besonders bevorzugt nicht oberhalb von 10 mm umfasst und/oder dass der Walzenflor der Walze, insbesondere miteinander verzwirnte, Polyesterfasern, insbesondere PET-Fasern, und Polyamidfasern, insbesondere in Form von Polfasern, umfasst und wobei die Polyesterfasern, insbesondere die PET-Fasern, bevorzugt eine mittlere Feinheit im Bereich von 2,0 bis 5,0 dtex, besonders bevorzugt von 2,5 bis 4,0 und insbesondere im Bereich von 3,0 bis 3,5 dtex, und die Polyamidfasern bevorzugt eine mittlere Feinheit im Bereich von 0,2 bis 1,8 dtex, besonders bevorzugt von 0,4 bis 1,5 dtex und insbesondere von 0,7 bis 1,2 dtex aufweisen.

14. Verfahren zur Bestimmung des Spritzverhaltens beim Auftragen von tropffähigen wässrigen, insbesondere fließfähigen, Beschichtungsmassen nach einem der Ansprüche 1 bis 7 mit einer Walze, umfassend
Zurverfügungstellung einer Prüfvorrichtung gemäß einem der Ansprüche 11 bis 13, Anbringen eines flächigen Prüfkörpers, insbesondere einer Gipskartonplatte, auf der vertikalen oder auf der aus der Vertikalen geneigten Unterlage,
Aufbringungen eines, insbesondere schwarzen, flächigen Testkörpers auf der Prüfauflage,
Einstellen des Anpressdrucks der Walze,
Einstellen der Hubgeschwindigkeit des Schlittens,
Einarbeiten der fließfähigen Beschichtungsmasse in den Florbesatz der Walze, Befestigung des Walzenbügels in der Verbindungsvorrichtung,
Starten der Hubbewegung des Schlittens unter Applikation der Beschichtungsmasse über die Walze auf den flächigen Prüfkörper,
Stoppen der Hubbewegung des Schlittens nach mindestens zwei, insbesondere drei bis sechs, vollständigen Aufwärts- und mindestens zwei, insbesondere drei bis sechs, vollständigen Abwärtsbewegungen,
Entnahme des flächigen Testkörpers und Bestimmung des Gewichts des Testkörpers und Ermittlung der Differenz zwischen dem Gewicht des Testkörpers nach der Applikation der Beschichtungsmasse und vor der Applikation der Beschichtungsmasse oder,
insbesondere Computer-gestützte, optische Bestimmung der Menge und gegebenenfalls der Größe der Spritzer der Beschichtungsmasse auf dem Testkörper.

15. Verfahren nach Anspruch 14, **dadurch gekennzeichnet, dass** die Walze mit einem Anpressdruck im Bereich von 20 N bis 50 N, insbesondere im Bereich von 30 N bis 40 N, mittels des Schlittens entlang des flächigen Prüfkörpers geführt wird.

## Claims

1. An aqueous coating composition capable of dripping, in particular a dispersion coating composition, containing
at least one inorganic, water-soluble binding agent or at least one organic, in particular water-dispersed or dispersible or water-emulsifiable or emulsified, binding agent,
at least one filler material and/or at least one pigment,
at least one thickener, selected from the group consisting of polyurethane thickeners, acrylate thickeners, polyether polyol thickeners, thickeners on a polysaccharide basis, sheet silicates and organically modified sheet silicates, or any mixtures of these, and
water,
**characterized in that**
the coating composition, in particular the dispersion coating composition, has a flow curve formed from the shear rates *γ̇* applied on the horizontal axis and the corresponding shear stress values τ applied on the vertical axis,
which over the range of the shear rates *γ̇* from 10 to 75 s⁻¹ yields an average gradient in the range of 1.5 to 7, preferably in the range of 1.8 to 6, and particularly preferred from 2 to 5.5 Pa·s and/or
which over the range of the shear rates *γ̇* from 10 to 150 s⁻¹ yields an average gradient in the range of 1.2 to 5, preferably in the range of 1.5 to 4 and particularly preferred in the range of 1.5 to 3.5 Pa·s and/or
which over the range of the shear rates *γ̇* from 10 to 300 s⁻¹ yields an average gradient in the range of 0.85 to 3.5, preferably in the range of 0.9 to 3 and particularly preferred in the range of 1.0 to 2.5 Pa·s and/or
which over the range of the shear rates *γ̇* from 1200 to 1500 s⁻¹ yields an average gradient of less than or equal to 0.1, preferably less than or equal to 0.08 and particularly preferred less than or equal to 0.05 Pa·s and/or
that the maximum shear stress τₘₐₓ determined for the coating composition, in particular the dispersion coating composition, or that the shear stress τ determined at a shear rate *γ̇* of 1500 s⁻¹ is greater than or equal to 650 Pa, preferably greater than or equal to 700 Pa and/or
that the shear rate *γ̇* at 50% of the maximum shear stress τₘₐₓ or the shear rate *γ̇* at 50% of the shear stress τ, which occurs at a shear rate *γ̇* of 1500 s⁻¹, does not lie above 200 s⁻¹, preferably not above 180 s⁻¹, and particularly preferred not above 150 s⁻¹.

2. The aqueous coating composition capable of dripping according to Claim 1, containing
a)
1 to 20 weight percent, preferably 2 to 15 weight percent, and particularly preferred 3 to 12.5 weight percent of the organic binding agent (solid substance content)
or
1 to 10 weight percent, preferably 1.5 to 7 weight percent of the inorganic binding agent (solid substance content) and maximum 5 weight percent of the organic binding agent (solid substance content)
or
1 to 20 weight percent, preferably 2 to 15 weight percent and particularly preferred 3 to 12.5 weight percent of the organic binding agent (solid substance content) and maximum 2.5 weight percent of the inorganic binding agent (solid substance content),
b)
1 to 50 weight percent, preferably 5 to 40 weight percent and particularly preferred 10 to 35 weight percent in relation to the total weight of the coating composition, in particular the dispersion coating composition, of filler material, in particular calcitic and/or siliceous filler materials, and/or 0.01 to 30 weight percent, preferably 0.1 to 25 weight percent and particularly preferred 0.2 to 20 weight percent in relation to the total weight of the coating composition, in particular the dispersion coating composition, of pigment, in particular titanium dioxide, and
c)
0.1 to 5 weight percent, preferably 0.5 to 4 weight percent and particularly preferred 0.7 to 3 weight percent in relation to the total weight of the coating composition, in particular the dispersion coating composition, of at least one acrylate thickener, or 0.1 to 5 weight percent, preferably 0.5 to 4 weight percent and particularly preferred 0.7 to 3 weight percent in relation to the total weight of the coating composition, in particular the dispersion coating composition, of at least one polyurethane thickener,
or
0.1 to 5 weight percent, preferably 0.5 to 4 weight percent and particularly preferred 0.7 to 3 weight percent in relation to the total weight of the coating composition, in particular the dispersion coating composition, of at least one polyether polyol thickener,
or
0.001 to 1 weight percent, preferably 0.01 to 0.5 weight percent and particularly preferred 0.02 to 0.3 weight percent in relation to the total weight of the coating composition, in particular the dispersion coating composition, of polysaccharide thickener,
or
0.01 to 1 weight percent, preferably 0.05 to 0.8 weight percent and particularly preferred 0.1 to 0.6 weight percent in relation to the total weight of the coating composition, in particular the dispersion coating composition, of at least one sheet silicate-based thickener,
or
0.1 to 5 weight percent, preferably 0.5 to 4 weight percent and particularly preferred 0.7 to 3 weight percent in relation to the total weight of the coating composition, in particular the dispersion coating composition, of at least one acrylate thickener and 0.001 to 1 weight percent, preferably 0.01 to 0.5 weight percent and particularly preferred 0.02 to 0.3 weight percent in relation to the total weight of the coating composition, in particular the dispersion coating composition, of at least one polysaccharide thickener,
or
0.1 to 5 weight percent, preferably 0.5 to 4 weight percent and particularly preferred 0.7 to 3 weight percent in relation to the total weight of the coating composition, in particular the dispersion coating composition, of at least one acrylate thickener and 0.001 to 1 weight percent, preferably 0.01 to 0.5 weight percent and particularly preferred 0.02 to 0.3 weight percent in relation to the total weight of the coating composition, in particular the dispersion coating composition, of at least one sheet silicate,
or
0.1 to 5 weight percent, preferably 0.5 to 4 weight percent and particularly preferred 0.7 to 3 weight percent in relation to the total weight of the coating composition, in particular the dispersion coating composition, of at least one acrylate thickener and
0.1 to 5 weight percent, preferably 0.5 to 4 weight percent and particularly preferred 0.7 to 3 weight percent, in relation to the total weight of the coating composition, in particular the dispersion coating composition, of at least one polyether polyol thickener,
or
0.1 to 5 weight percent, preferably 0.5 to 4 weight percent and particularly preferred 0.7 to 3 weight percent in relation to the total weight of the coating composition, in particular the dispersion coating composition, of at least one acrylate thickener and 0.1 to 5 weight percent, preferably 0.5 to 4 weight percent and particularly preferred 0.7 to 3 weight percent in relation to the total weight of the coating composition, in particular the dispersion coating composition, of at least one polyurethane thickener,
or
0.1 to 5 weight percent, preferably 0.5 to 4 weight percent and particularly preferred 0.7 to 3 weight percent in relation to the total weight of the coating composition, in particular the dispersion coating composition, of at least one polyurethane thickener and 0.001 to 1 weight percent, preferably 0.01 to 0.5 weight percent and particularly preferred 0.02 to 0.3 weight percent in relation to the total weight of the coating composition, in particular the dispersion coating composition, of at least one polysaccharide thickener,
or
0.1 to 5 weight percent, preferably 0.5 to 4 weight percent and particularly preferred 0.7 to 3 weight percent in relation to the total weight of the coating composition, in particular the dispersion coating composition, of at least one polyurethane thickener and 0.001 to 1 weight percent, preferably 0.01 to 0.5 weight percent and particularly preferred 0.02 to 0.3 weight percent in relation to the total weight of the coating composition, in particular the dispersion coating composition, of at least one sheet silicate,
or
0.1 to 5 weight percent, preferably 0.5 to 4 weight percent and particularly preferred 0.7 to 3 weight percent in relation to the total weight of the coating composition, in particular the dispersion coating composition, of at least one polyurethane thickener and 0.1 to 5 weight percent, preferably 0.5 to 4 weight percent and particularly preferred 0.7 to 3 weight percent in relation to the total weight of the coating composition, in particular the dispersion coating composition, of at least one polyether polyol thickener,
or
0.1 to 5 weight percent, preferably 0.5 to 4 weight percent and particularly preferred 0.7 to 3 weight percent in relation to the total weight of the coating composition, in particular the dispersion coating composition, of at least one polyether polyol thickener and 0.001 to 1 weight percent, preferably 0.01 to 0.5 weight percent and particularly preferred 0.02 to 0.3 weight percent in relation to the total weight of the coating composition, in particular the dispersion coating composition, of at least one polysaccharide thickener,
or
0.1 to 5 weight percent, preferably 0.5 to 4 weight percent and particularly preferred 0.7 to 3 weight percent in relation to the total weight of the coating composition, in particular the dispersion coating composition, of at least one polyether polyol thickener, and 0.001 to 1 weight percent, preferably 0.01 to 0.5 weight percent and particularly preferred 0.02 to 0.3 weight percent in relation to the total weight of the coating composition, in particular the dispersion coating composition, of at least one sheet silicate,
and
d)
water.

3. The coating composition according to Claim 1 or 2, **characterized in that** the binding agent is an inorganic binding agent, in particular water glass, or an organic binding agent on the basis of at least one polymer that is water-dispersed or dispersible, whereby the polymers that are water-dispersed or dispersible are formed from the same or different monomers, whereby at least one of the monomers is an acrylic acid ester, a methacryl acid ester, an acrylic acid, methacrylic acid, vinyl acetate, vinyl chloride, versatate, acrylic nitrile or a vinyl-aromatic compound, or whereby the organic binding agent comprises or is vinyl acetate/ethylene copolymers, copolymers on the basis of vinyl aromates, in particular styrol, and acrylates or on the basis of pure acrylates, or that the organic binding agent comprises or is silicon resins, or an organic binding agent on the basis of at least one water-emulsifiable or emulsified polymer, in particular a silicon resin.

4. The coating composition according to any one of the preceding claims, containing, in relation to the total weight of the coating composition, in particular the dispersion coating composition,
1 to 20 weight percent, preferably 2 to 15 weight percent, and particularly preferred 3 to 12.5 weight percent of the organic binding agent (solid substance content), in particular insofar as synthetic dispersion paints and dispersion silicate paints are concerned, or
1 to 25 weight percent, preferably 1.5 to 20 weight percent, and particularly preferred 3 to 15 weight percent of the organic binding agent (solid substance content), in particular insofar as silicone resin paints are concerned, or
0.1 to 10.0 weight percent, preferably 0.5 to 7.0 weight percent, and particularly preferred 0.7 to 2.5 weight percent of the inorganic binding agent (solid substance content), in particular insofar as silicate paints and dispersion silicate paints are concerned.

5. The coating composition according to any one of the preceding claims, **characterized in that**
the at least one thickener
is an acrylate thickener, in particular in a quantity, in relation to the total weight of the coating composition, in particular the dispersion coating composition, of 0.5 to 4 weight percent, or
a polyurethane thickener, in particular in a quantity, in relation to the total weight of the coating composition, in particular the dispersion coating composition, of 0.2 to 5 weight percent, or
a polyether polyol thickener, in particular in a quantity, in relation to the total weight of the coating composition, in particular the dispersion coating composition, of 0.2 to 5 weight percent, or
a thickener based on polysaccharide, in particular in a quantity, in relation to the total weight of the coating composition, in particular the dispersion coating composition, of 0.01 to 1 weight percent, or
a sheet silicate thickener, in particular in a quantity, in relation to the total weight of the coating composition, in particular the dispersion coating composition, of 0.01 to 0.5 weight percent, or
that the thickener comprises a mixture of at least two thickeners, selected from the group consisting of polyurethane thickeners, acrylate thickeners, polyether polyol thickeners, thickeners on a polysaccharide basis, sheet silicates and organically modified sheet silicates, in particular a mixture of at least one acrylate thickener and at least one thickener on a polysaccharide basis or a mixture of at least one polyurethane thickener and at least one thickener on a polysaccharide basis.

6. The coating composition according to any one of the preceding claims, **characterized in that**
the polyurethane thickener comprises at least one HEUR thickener (hydrophobically modified ethoxylated urethane), or that
the acyrlate thickener comprises at least one HASE thickener (hydrophobically modified alkali soluble emulsion), in particular based on copolymers containing or consisting of methyl methacrylate and ethyl acrylate, whereby this acrylate thickener, in particular the HASE acrylate thickener, has in particular a number average molecular weight Mₙ in the range of 100 to 300 kDa, preferably in the range of 150 to 250 kDa, and/or a weight average molecular weight Mₙ in the range of 400 to 800 kDa, preferably in the range of 500 to 700 kDa.

7. The coating composition according to any one of the preceding claims, **characterized in that**
the coating composition, in particular the dispersion coating composition, has a flow curve formed from the shear rates *γ̇* applied on the horizontal axis and the corresponding shear stress values τ applied on the vertical axis,
which over the range of the shear rates *γ̇* from 10 to 75 s⁻¹ yields an average gradient in the range of 1.5 to 7, preferably in the range of 1.8 to 6, and particularly preferred from 2 to 5.5 Pa·s and
which over the range of the shear rates *γ̇* from 1200 to 1500 s⁻¹ yields an average gradient of less than or equal to 0.1, preferably less than or equal to 0.08 and particularly preferred less than or equal to 0.05 Pa·s and/or that
the coating composition, in particular the dispersion coating composition, has a flow curve formed from the shear rates *γ̇* applied on the horizontal axis and the corresponding shear stress values τ applied on the vertical axis, which over the range of the shear rates *γ̇* from 10 to 75 s⁻¹ yields an average gradient in the range of 1.5 to 7, preferably in the range of 1.8 to 6, and particularly preferred from 2 to 5.5 Pa·s and
which over the range of the shear rates *γ̇* from 1200 to 1500 s⁻¹ yields an average gradient of less than or equal to 0.1, preferably less than or equal to 0.08 and particularly preferred less than or equal to 0.05 Pa·s
and
that the shear rate *γ̇* at 50% of the maximum shear stress τₘₐₓ or the shear rate *γ̇* at 50% of the shear stress τ, which occurs at a shear rate *γ̇* of 1500 s⁻¹, does not lie above 200 s⁻¹, preferably not above 180 s⁻¹, and particularly preferred not above 150 s⁻¹, and/or that
the coating composition, in particular the dispersion coating composition, has a flow curve formed from the shear rates *γ̇* applied on the horizontal axis and the corresponding shear stress values τ applied on the vertical axis,
which over the range of the shear rates *γ̇* from 10 to 75 s⁻¹ yields an average gradient in the range of 1.5 to 7, preferably in the range of 1.8 to 6, and particularly preferred from 2 to 5.5 Pa·s and
which over the range of the shear rates *γ̇* from 1200 to 1500 s⁻¹ yields an average gradient of less than or equal to 0.1, preferably less than or equal to 0.08 and particularly preferred less than or equal to 0.05 Pa·s and
that the maximum shear stress τₘₐₓ determined for the coating composition, in particular the dispersion coating composition, or that the shear stress τ determined at a shear rate *γ̇* of 1500 s⁻¹ is greater than or equal to 650 Pa, preferably greater than or equal to 700 Pa.

8. A coat of paint obtained with the coating composition, in particular dispersion coating composition, according to any one of the preceding claims.

9. The use of the coating composition, in particular the dispersion coating composition, according to one of Claims 1 to 7 for spray- and/or mist-reduced, -low level or -free application onto a surface with a painter's roller and/or as a spray- or mist-low level or spray- or mist-free silicate paint, dispersion silicate paint, silicone resin paint or dispersion paint.

10. A kit-of-parts, comprising a coating composition according to any one of Claims 1 to 7 and a roller, in particular a painter's roller, comprising a nap trimming, a roller body and a roller holder, whereby the nap trimming comprises fibres, in particular pile fibres, with an average fibre length, in particular an absolute fibre length, not above 20 mm, preferably not above 15 mm and particularly preferred not above 10 mm, and whereby the fibres comprise in particular polyester fibres, in particular PET fibres, and polyamide fibres, in particular polyester and polyamide fibres that are entwined with each other, and whereby the polyester fibres, in particular the PET fibres, preferably have an average fineness ranging from 2.0 to 5.0 dtex, particularly preferred from 2.5 to 4.0 and in particular in the range of 3.0 to 3.5 dtex, and the polyamide fibres preferably have an average fineness ranging from 0.2 to 1.8 dtex, particularly preferred from 0.4 to 1.5 dtex and in particular from 0.7 to 1.2 dtex.

11. A test device for determining the spray behaviour of, in particular flowable, coating compositions according to any one of Claims 1 to 7, comprising a programmable logic controller,
a vertical or angled from the vertical, in particular plate-shaped, base with an upper and a lower end,
at a distance from the base, in particular evenly distanced, a guide device, in particular a guide rail, for holding a motor-driven slide movable within it,
said slide
a movably supported connecting device, in particular a plug-in device, connectable or connected with the slide, for holding the roller holder of a roller,
said roller, situated or affixable in the connecting device, in particular a painter's roller, containing a nap substance, a roller body and a roller holder, a drive in active connection with the programmable logic controller, installed and designed to convey the slide in the guide device, a horizontal or angled from the horizontal test attachment, which is arranged at an angle, in particular at right-angles, to or in relation to the base, and on or adjacent to the lower end of the base,
a first sensor in active connection with the programmable logic controller, arranged and installed to detect the slide, the roller and/or the connecting device on an upper reversal point, and
a second sensor in active connection with the programmable logic controller, arranged and installed to detect the slide, the roller and/or the connecting device at a lower reversal point.

12. The device according to Claim 11, further comprising
a flat test piece, in particular a gypsum board plate, which lies in contact on the vertical or angled from the vertical, in particular plate-shaped, base and/or an in particular black, flat test piece, which lies on the test attachment and which in particular borders on the vertical or angled from the vertical, in particular plate-shaped base or on the flat test piece,
and/or further comprising
an affixing device, in particular a clamping device, installed and designed for the detachable mounting of a flat test piece, in particular a gypsum board plate, on the vertical or angled from the vertical, in particular plate-shaped, base,
and/or further comprising
a third sensor which interacts with the programmable logic controller and which lies at a distance from the first sensor and in the direction of the second sensor, installed and designed to create a throttling of the speed of the movable slide in the direction of the first sensor (upward direction) and/or further comprising a fourth sensor in active connection with the programmable logic controller and at a distance from the second sensor and in the direction of the first and, if appropriate, the third sensor,
installed and designed to create a throttling of the movable slide in the direction of the second sensor (downward direction) and/or further comprising
a power consumer for the, in particular continuous, measurement of the contact pressure of the roller on the base or in particular on the flat test piece lying on the base, whereby the contact pressure of the roller lying in the movably supported connecting device, in particular on the flat test piece that lies on the base, in particular in the range of 25 N to 45 N, preferably in the range of 30 N to 40 N, or in particular is adjustable in the range of 25 N to 45 N, preferably in the range of 30 N to 40 N.

13. The device according to Claim 11 or 12, **characterized in that** the roller comprises a fibre nap with fibres, in particular pile fibres, with an average fibre length, in particular an absolute fibre length, not exceeding 20 mm, preferably not exceeding 15 mm and particularly preferred not exceeding 10 mm and/or that the roller nap of the roller comprises polyester fibres, in particular entwined with each other, in particular PET fibres, and polyamide fibres, in particular in the form of pile fibres and whereby the polyester fibres, in particular the PET fibres, preferably have an average fineness ranging from 2.0 to 5.0 dtex, particularly preferred from 2.5 to 4.0 and in particular in the range of 3.0 to 3.5 dtex, and the polyamide fibres preferably have an average fineness in the range of 0.2 to 1.8 dtex, particularly preferred from 0.4 to 1.5 dtex, and in particular from 0.7 to 1.2 dtex.

14. The method for determining the spray behaviour when applying aqueous, in particular flowable, coating compositions capable of dripping according to any one of Claims 1 to 7 with a roller, comprising
the provision of a test device according to any one of Claims 11 to 13, the mounting of a flat test piece, in particular a gypsum board body, on the vertical or on the angled from the vertical base,
attachment of an, in particular black, flat test piece on the test attachment, adjustment of the contact pressure of the roller,
adjustment of the stroke speed of the slide,
incorporation of the flowable coating composition into the nap trimming of the roller, affixation of the roller holder in the connecting device,
starting of the stroke movement of the slide while applying the coating composition via the roller onto the flat test piece,
stopping the stroke movement of the slide after at least two, in particular three to six, complete upward and at least two, in particular three to six, complete downward movements,
removing the flat test piece and determining the weight of the test body and calculating the difference between the weight of the test body after applying the coating composition and before applying the coating composition or,
in particular computer-supported, visual determination of the quantity and if appropriate the size of the sprayer of the coating composition on the test body.

15. The method according to Claim 14, **characterized in that**
the roller is guided by means of the slide along the flat test piece with a contact pressure in the range of 20 N to 50 N, in particular in the range of 30 N to 40 N.

## Revendications

1. Masses de revêtement aqueuses pouvant s'égoutter, en particulier masses de revêtement de dispersion, contenant :
au moins un liant inorganique soluble dans l'eau ou au moins un liant organique, en particulier dispersé ou pouvant être dispersé dans l'eau ou pouvant être émulsionné ou émulsionné dans l'eau ;
au moins une charge et/ou au moins un pigment ;
au moins un épaississant choisi dans le groupe constitué par les épaississants à base de polyuréthane, des épaississants à base d'acrylate, des épaississants à base de polyol de polyéther, des épaississants à base de polysaccharides, des silicates stratifiés et des silicates stratifiés organiquement modifiés ou des mélanges quelconques desdits épaississants ; et
de l'eau,
**caractérisée en ce que**
la masse de revêtement, en particulier la masse de revêtement de dispersion, comporte une courbe d'écoulement, formée à partir des vitesses de cisaillement *γ̇* tracées en abscisse et à partir des valeurs de contrainte de cisaillement (τ) correspondantes,
laquelle présente un pas moyen, déterminé à l'aide de la plage de vitesses de cisaillement *γ̇* de 10 à 75 s⁻¹, dans la plage de 1,5 à 7, de préférence dans la plage de 1,8 à 6 et de préférence encore de 2 à 5,5 Pa·s et/ou
laquelle présente un pas moyen, déterminé à l'aide de la plage de vitesses de cisaillement *γ̇* de 10 à 150 s⁻¹, dans la plage de 1,2 à 5, de préférence dans la plage de 1,5 à 4 et de préférence encore de 1,5 à 3,5 Pa·s et/ou
laquelle présente un pas moyen, déterminé à l'aide de la plage de vitesses de cisaillement *γ̇* de 10 à 300 s⁻¹, dans la plage de 0,85 à 3,5, de préférence dans la plage de 0,9 à 3 et de préférence encore de 1,0 à 2,5 Pa·s et/ou
laquelle présente un pas moyen, déterminé à l'aide de la plage de vitesses de cisaillement *γ̇* de 1200 à 1500 s⁻¹, inférieur ou égal à 0,1, de préférence inférieur ou égal à 0,8 et de préférence encore inférieur ou égal à 0,05 Pa·s et/ou
que la contrainte de cisaillement maximale τₘₐₓ, déterminée pour la masse de revêtement, en particulier la masse de revêtement de dispersion ou que la contrainte de cisaillement τ, déterminée à une vitesse de cisaillement de 1 500 s⁻¹, est supérieure ou égale à 650 Pa, de préférence supérieure ou égale à 700 Pa, et/ou
que la vitesse de cisaillement *γ̇* à 50 % de la contrainte maximale de cisaillement τₘₐₓ ou la vitesse de cisaillement *γ̇* à 50 % de la contrainte de cisaillement τ, laquelle est établie à une vitesse de cisaillement *γ̇* de 1 500 s⁻¹, est inférieure à 200 s⁻¹, de préférence est inférieure à 150 s⁻¹ et de préférence encore est inférieure à 180 s⁻¹.

2. Masse de revêtement aqueuse pouvant s'égoutter selon la revendication 1, contenant :
a)
1 à 20 % pourcentage en poids, de préférence de 2 à 15 % pourcentage en poids et de préférence encore de 3 à 12,5 % pourcentage en poids du liant organique (teneur en matières solides)
ou
1 à 10 % pourcentage en poids, de préférence de 1,5 à 7 % pourcentage en poids du liant inorganique (teneur en matières solides) et un maximum de 5 % pourcentage en poids du liant organique (teneur en matières solides)
ou
1 à 20 % pourcentage en poids, de préférence de 2 à 15 % pourcentage en poids et de préférence encore de 3 à 12,5 % pourcentage en poids du liant organique (teneur en matières solides) et un maximum de 2,5 % pourcentage en poids du liant inorganique (teneur en matières solides) ;
b)
1 à 50 % pourcentage en poids, de préférence de 5 à 40 % pourcentage en poids et de préférence encore de 10 à 35 % pourcentage en poids, rapporté au poids total de la masse de revêtement, en particulier de la masse de revêtement de dispersion, des charges, en particulier des charges calcitiques et/ou siliceuses et/ou
0,01 à 30 % pourcentage en poids, de préférence 0,1 à 25 % pourcentage en poids et de préférence encore de 0,2 à 20 % pourcentage en poids, rapporté au poids total de la masse de revêtement, en particulier de la masse de revêtement de dispersion, du pigment, en particulier du dioxyde de titane ; et
c)
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base d'acrylate
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base de polyuréthane
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base de polyol de polyéther
ou
0,001 à 1 % pourcentage en poids, de préférence 0,01 à 0,5 % pourcentage en poids et de préférence encore 0,02 à 0,3 % pourcentage en poids, rapporté au poids total de la masse de revêtement, en particulier de la masse de revêtement de dispersion, d'au moins un épaississant à base de polysaccharides
ou
0,01 à 1 % pourcentage en poids, de préférence de 0,05 à 0,8 % pourcentage en poids et de préférence encore de 0,1 à 0,6 % pourcentage en poids, rapporté au poids total de la masse de revêtement, en particulier de la masse de revêtement de dispersion, d'au moins un silicate stratifié
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base d'acrylate et
0,001 à 1 % pourcentage en poids, de préférence de 0,01 à 0, 5 % pourcentage en poids et de préférence encore de 0,02 à 0,3 % pourcentage en poids, rapporté au poids total de la masse de revêtement, en particulier de la masse de revêtement de dispersion, d'au moins un épaississant à base de polysaccharides
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base d' acrylate et
0,001 à 1 % pourcentage en poids, de préférence de 0,01 à 0,5 % pourcentage en poids et de préférence encore de 0,02 à 0,3 % pourcentage en poids, rapporté au poids total de la masse de revêtement, en particulier de la masse de revêtement de dispersion, d'au moins un silicate stratifié
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base d'acrylate et
0,1 à 5 % pourcentage en poids, de préférence 0,5 à 4 % pourcentage en poids et de préférence encore 0,7 à 3 % pourcentage en poids, rapporté au poids total de la masse de revêtement, en particulier de la masse de revêtement de dispersion, d'au moins un épaississant à base de polyol de polyéther
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base d'acrylate et
0,1 à 5 % pourcentage en poids, de préférence 0,5 à 4 % pourcentage en poids et de préférence encore 0,7 à 3 % pourcentage en poids, rapporté au poids total de la masse de revêtement, en particulier de la masse de revêtement de dispersion, d'au moins un épaississant à base de polyuréthane
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base de polyuréthane et
0,001 à 1 % pourcentage en poids, de préférence de 0,01 à 0,5 % pourcentage en poids et de préférence encore 0,02 à 0,3 % pourcentage en poids, rapporté au poids total de la masse de revêtement, en particulier de la masse de revêtement de dispersion, d'au moins un épaississant à base de polysaccharides
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier la masse de revêtement de dispersion, d'au moins un épaississant à base de polyuréthane et
0,001 à 1 % pourcentage en poids, de préférence 0,01 à 0,5 % pourcentage en poids et de préférence encore de 0,02 à 0,3 % pourcentage en poids, rapporté au poids total de la masse de revêtement, en particulier de la masse de revêtement de dispersion, d'au moins un silicate stratifié
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier la masse de revêtement de dispersion, d'au moins un épaississant à base de polyuréthane et
0,1 à 5 % pourcentage en poids, de préférence 0,5 à 4 % pourcentage en poids et de préférence encore 0,7 à 3 % pourcentage en poids, rapporté au poids total de la masse de revêtement, en particulier de la masse de revêtement de dispersion, d'au moins un épaississant à base de polyol de polyéther
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base de polyol de polyéther et
0,001 à 1 % pourcentage en poids, de préférence 0 01 à 0,5 % pourcentage en poids, et de préférence encore 0,02 à 0,3 % pourcentage en poids, rapporté au poids total de la masse de revêtement, en particulier de la masse de revêtement de dispersion, d'au moins un épaississant à base de polysaccharides
ou
0,1 à 5 % pourcentage en poids, de préférence de 0,5 à 4 % pourcentage en poids et de préférence encore de 0,7 à 3 % pourcentage en poids, rapporté au poids total de la masse de revêtement, en particulier de la masse de revêtement de dispersion, d'au moins un épaississant à base de polyol de polyéther et
0,001 à 1 % pourcentage en poids, de préférence 0, 01 à 0,5 % pourcentage en poids et de préférence encore 0,02 à 0,3 % pourcentage en poids, rapporté au poids total de la masse de revêtement, en particulier de la masse de revêtement de dispersion, d'au moins un silicate stratifié ;
et
d)
de l'eau.

3. Masse de revêtement selon la revendication 1 ou 2, **caractérisée en ce que** le liant représente : un liant inorganique, en particulier un verre soluble ; ou un liant organique à base d'au moins un polymère dispersé ou pouvant être dispersé dans l'eau, lesdits polymères dispersés ou pouvant être dispersés dans l'eau étant formés à partir des monomères identiques ou différents, au moins un des monomères étant un ester de l'acide acrylique, un ester de l'acide méthacrylique, un acide acrylique, un acide méthacrylique, un acétate de vinyle, une chlorure de vinyle, un versatat, un acrylonitrile ou un composé vinyle aromatique ou ledit liant organique comporte ou représente des copolymères d'acétate de vinyle/éthylène, des copolymères à base de composés aromatiques vinyliques, en particulier le styrène et à base d'acrylate ou à base d'acrylate pur ou ledit liant organique comporte ou représente des résines de silicone ; ou un liant organique à base d'au moins un polymère pouvant être émulsionné ou émulsionné dans l'eau, en particulier d'une résine de silicone.

4. Masse de revêtement selon l'une quelconque des revendications précédentes, contenant, rapporté au poids total de la masse de revêtement, en particulier de la masse de revêtement de dispersion :
1 à 20 % pourcentage en poids, de préférence de 2 à 15 % pourcentage en poids et de préférence encore de 3 à 12,5 % pourcentage en poids du liant organique (teneur en matières solides), en particulier en ce qui concerne les peintures de dispersion de matière synthétique et les peintures de dispersion de silicate
ou
1 à 25 % pourcentage en poids, de préférence de 1,5 à 20 % pourcentage en poids et de préférence encore 3 à 15 % pourcentage en poids du liant organique (teneur en matières solides), en particulier en ce qui concerne les peintures de dispersion de résine de silicone
ou
0,1 à 10,0 % pourcentage en poids, de préférence de 0,5 à 7,0 % pourcentage en poids et de préférence encore 0,7 à 2,5 % pourcentage en poids du liant inorganique (teneur en matières solides), en particulier en ce qui concerne les peintures aux silicates et les peintures de dispersion de silicate.

5. Masse de revêtement selon l'une quelconque des revendications précédentes, **caractérisée en ce que**
au moins un épaississant comporte un épaississant à base d'acrylate, en particulier en une quantité, rapporté au poids total de la masse de revêtement, en particulier de la masse de revêtement de dispersion, de 0,5 à 4 % pourcentage en poids, ou
un épaississant à base de polyuréthane, en particulier en une quantité, rapporté au poids total de la masse de revêtement, en particulier de la masse de revêtement de dispersion, de 0,2 à 5 % pourcentage en poids, ou
un épaississant à base de polyol de polyéther, en particulier en une quantité, rapporté au poids total de la masse de revêtement, en particulier de la masse de revêtement de dispersion, de 0,2 à 5 % pourcentage en poids, ou
un épaississant à base de polysaccharides, en particulier en une quantité, rapporté au poids total de la masse de revêtement, en particulier de la masse de revêtement de dispersion, de 0,01 à 1 % pourcentage en poids, ou
un épaississant à base de silicates stratifiés, en particulier en une quantité, rapporté au poids total de la masse de revêtement, en particulier de la masse de revêtement de dispersion, de 0,01 à 0,5 % pourcentage en poids, ou
**que** l'épaississant est un mélange d'au moins deux épaississants choisis dans le groupe constitué par des épaississants à base de polyuréthane, des épaississants à base d'acrylate, des épaississants à base de polyol de polyéther, des épaississants à base de polysaccharides, des silicates stratifiés et des silicates stratifiés organiquement modifiés, en particulier un mélange d'au moins un épaississant à base d'acrylate et d'au moins un épaississant à base de polysaccharides ou un mélange d'au moins un épaississant à base de polyuréthane et d'au moins un épaississant à base de polysaccharides.

6. Masse de revêtement selon l'une quelconque des revendications précédentes, **caractérisée en ce que**
l'épaississant à base de polyuréthane comporte au moins un épaississant à base de polyuréthane éthoxylé hydrophobiquement modifié (HEUR)
ou
l'épaississant à base d'acrylate comporte au moins un épaississant à base d'émulsion soluble dans des alcalis hydrophobiquement modifiée (HASE), en particulier à base de copolymères contenant ou consistant en méthacrylate de méthacrylate de méthyle et d'acrylate d'éthyle, ledit épaississant à base d'acrylate, en particulier l'épaississant à base d'acrylate HASE, comporte, en particulier un poids moléculaire moyen Mₙ dans la plage de 100 à 300 kDa, de préférence dans la plage de 150 à 250 kDa, et/ou un poids moléculaire moyen Mₙ dans la plage de 400 à 800 kDa, de préférence dans la plage de 500 à 700 kDa.

7. Masse de revêtement selon l'une quelconque des revendications précédentes, **caractérisée en ce que**
ladite masse de revêtement, en particulier la masse de revêtement de dispersion, comporte une courbe d'écoulement, formée à partir des vitesses de cisaillement (Y) tracées en abscisse et à partir des valeurs de contrainte de cisaillement (τ) correspondantes,
laquelle présente un pas moyen, déterminé à l'aide de la plage de vitesses de cisaillement (Y) de 10 à 75 s-1, dans la plage de 1,5 à 7, de préférence dans la plage de 1,8 à 6 et de préférence encore de 2 à 5,5 Pa·s et
laquelle présente un pas moyen, déterminé à l'aide de la plage de vitesses de cisaillement (Y) de 1200 à 1500 s-1, inférieur ou égal à 0,1, de préférence inférieur ou égal à 0,8 et de préférence encore inférieur ou égal à 0,05 Pa·s et/ou que la masse de revêtement, en particulier la masse de revêtement de dispersion, comporte une courbe d'écoulement, formée à partir des vitesses de cisaillement (Y) tracées en abscisse et à partir des valeurs de contrainte de cisaillement (τ) correspondantes,
laquelle présente un pas moyen, déterminé à l'aide de la plage de vitesses de cisaillement (Y) de 10 à 75 s-1, dans la plage de 1,5 à 7, de préférence dans la plage de 1,8 à 6 et de préférence encore de 2 à 5,5 Pa·s et
laquelle présente un pas moyen, déterminé à l'aide de la plage de vitesses de cisaillement (Y) de 1200 à 1500 s-1, inférieur ou égal à 0,1, de préférence inférieur ou égal à 0,8 et de préférence encore inférieur ou égal à 0,05 Pa·s et
**que** la vitesse de cisaillement (Y) à 50 % de la contrainte maximale de cisaillement τ max ou la vitesse de cisaillement (Y) à 50 % de la contrainte de cisaillement τ, laquelle est établie à une vitesse de cisaillement (Y) de 1 500 s-1, est inférieure à 200 s-1, de préférence est inférieure à 150 s-1 et de préférence encore est inférieure à 180 s-1, et / ou
**que** la masse de revêtement, en particulier la masse de revêtement de dispersion, comporte une courbe d'écoulement, formée à partir des vitesses de cisaillement (Y) tracées en abscisse et à partir des valeurs de contrainte de cisaillement (τ) correspondantes,
laquelle présente un pas moyen, déterminé à l'aide de la plage de vitesses de cisaillement (Y) de 10 à 75 s-1, dans la plage de 1,5 à 7, de préférence dans la plage de 1,8 à 6 et de préférence encore de 2 à 5,5 Pa·s et
laquelle présente un pas moyen, déterminé à l'aide de la plage de vitesses de cisaillement (Y) de 1200 à 1500 s-1, inférieur ou égal à 0,1, de préférence inférieur ou égal à 0,8 et de préférence encore inférieur ou égal à 0,05 Pa·s et
**que** la contrainte de cisaillement maximale τₘₐₓ, déterminée pour la masse de revêtement, en particulier la masse de revêtement de dispersion ou que la contrainte de cisaillement τ, déterminée à une vitesse de cisaillement de 1 500 s-1, est supérieure ou égale à 650 Pa, de préférence supérieure ou égale à 700 Pa.

8. Peinture obtenue avec la masse de revêtement, en particulier la masse de revêtement de dispersion, selon l'une quelconque des revendications précédentes.

9. Utilisation de la masse de revêtement, en particulier de la masse de revêtement de dispersion, selon l'une quelconque des revendications 1 à 7, pour la peinture par pulvérisation et/ou brouillard réduit, faible ou sans pulvérisation et/ou brouillard, sur une surface à l'aide d'un rouleau de peinture et/ou en tant que peintures aux silicates et peintures de dispersion de silicate, peintures de dispersion de résine de silicone ou peintures de dispersion de matière synthétique par pulvérisation ou par brouillard faibles ou sans pulvérisation ou sans brouillard.

10. Coffret de parties, comportant une masse de revêtement selon l'une quelconque des revendications 1 à 7 et un rouleau, en particulier un rouleau de peinture, comportant un tissu de poils, un corps de rouleau et un étrier de rouleau de peinture, des fibres du tissu de poils comportant, en particulier des fibres à base de polyamide, présentant une longueur de fibre moyenne, en particulier une longueur de fibre absolu, inférieure à 20 mm, de préférence inférieure à 15 mm et de préférence encore inférieure à 10 mm et lesdites fibres comportant, en particulier les fibres à base de polyester, en particulier les fibres à base de PET et les fibres à base de polyamide, en particulier les fibres à base de polyester et de polyamide retordues les unes avec les autres et lesdites fibres à base de polyester, en particulier les fibres à base de PET, comportant, de préférence une finesse moyenne dans la plage de 2,0 à 5,0 dtex, de préférence encore de 2,5 à 4,0 et, en particulier dans la plage de 3,0 à 3,5 dtex et les fibres à base de polyamide comportant, de préférence une finesse moyenne dans la plage de 0,2 à 1,8 dtex, de préférence encore de 0,4 à 1,5 dtex et, en particulier de 0,7 et 1,2 dtex.

11. Dispositif d'essai destiné à la détermination du comportement de pulvérisation de la masse de revêtement, en particulier pouvant s'égoutter, selon l'une quelconque des revendications 1 à 7, comprenant :
une commande par programme enregistré ;
un substrat, vertical ou incliné par rapport à la verticale, en particulier en forme de plaque, pourvu d'une extrémité supérieure et d'une extrémité inférieure ;
un dispositif de guidage, en particulier un rail de guidage, espacé du substrat, en particulier espacé uniformément, destiné à recevoir une pièce coulissante entraînée par moteur de manière à se déplacer dans ledit dispositif de guidage ;
ladite pièce coulissante ;
un dispositif de raccordement, monté mobile, pouvant être raccordé ou raccordé à ladite pièce coulissante, en particulier un dispositif enfichable, destiné à recevoir l'étrier de rouleau d'un rouleau ;
ledit rouleau, présent ou pouvant être fixé dans ledit dispositif de raccordement, en particulier le rouleau de peinture, comportant un tissu de poils, un corps de rouleau et un étrier de rouleaux ;
un entraînement, raccordé fonctionnellement à la commande par programme enregistré, agencé et conçu pour transporter la pièce coulissante dans le dispositif de guidage,
une couche d'essai, horizontale ou inclinée par rapport à l'horizontale, laquelle est disposé à un angle, en particulier à angle droit, à ou par rapport au substrat et laquelle est présente à ou près de l'extrémité inférieure du substrat ;
un premier capteur, raccordé fonctionnellement à la commande par programme enregistré et conçu pour détecter la pièce coulissante, le rouleau et/ou le dispositif de raccordement à un point d'inversion supérieur ; et
un deuxième capteur, raccordé fonctionnellement à la commande par programme enregistré et conçu pour détecter la pièce coulissante, le rouleau et/ou le dispositif de raccordement à un point d'inversion inférieur.

12. Dispositif selon la revendication 11, comprenant en outre
un corps d'essai plan, en particulier une plaque de carton et de gypse, lequel est disposé sur une couche verticale ou incliné par rapport à la verticale, en particulier en forme de plaque et/ou un corps de test, en particulier noir, plan, lequel est disposé sur la couche d'essai et lequel est adjacent, en particulier, au substrat, verticale ou incliné par rapport à la verticale, en particulier en forme de plaque ou au corps d'essai plan ; et/ou comprenant en outre
un dispositif de fixation, en particulier un dispositif de serrage, agencé et conçu pour fixer amovible un corps d'essai plan, en particulier une plaque de carton et de gypse, au substrat, verticale ou inclinée par rapport à la verticale, en particulier en forme de plaque,
et/ou comprenant en outre
un troisième capteur, raccordé fonctionnellement à la commande par programme enregistré et espacé du premier capteur et disposé dans la direction du deuxième capteur, agencé et conçu pour provoquer une limitation de la vitesse de la pièce coulissante mobile dans la direction du premier capteur (direction vers le haut) et/ou comprenant en outre
un quatrième capteur, interagissant avec la commande par programme enregistré et espacé du deuxième capteur et disposé dans la direction du premier et éventuellement du troisième capteur, agencé et conçu pour provoquer une limitation de la vitesse de la pièce coulissante mobile dans la direction du deuxième capteur (direction vers le bas), et / ou comprenant en outre
un capteur de force, destiné, en particulier à la mesure continue de la force de pression du rouleau sur le substrat ou, en particulier sur le corps d'essai plan disposé sur le substrat, la force de pression du rouleau disposé mobile dans le dispositif de raccordement sur le substrat, en particulier sur le corps d'essai plan disposé sur le substrat, étant, en particulier dans la plage de 25 à 45 N, de préférence dans la plage de 30 N, est N à 40 N ou ladite force de pression étant réglable, en particulier à une valeur dans la plage de 25 N à 45 N, de préférence dans la plage de 30 N à 40 N.

13. Dispositif selon la revendication 11 ou 12, **caractérisé en ce que** le rouleau comporte un tissu de poils doté des poils, en particulier des fibres à base de polyamide, présentant une longueur de fibre moyenne, en particulier une longueur de fibre absolu, inférieure à 20 mm, de préférence inférieure à 15 mm et de préférence encore inférieure à 10 mm ou que ledit tissu de poils du rouleau comporte, en particulier les fibres à base de polyester, en particulier les fibres à base de PET et les fibres à base de polyamide, en particulier les fibres à base de polyester et de polyamide retordues les unes avec les autres et lesdits fibres à base de polyester, en particulier les fibres à base de PET, comportant, de préférence une finesse moyenne dans la plage de 2,0 à 5,0 dtex, de préférence encore de 2,5 à 4,0 et, en particulier dans la plage de 3,0 à 3,5 dtex et les fibres à base de polyamide comportant, de préférence une finesse moyenne dans la plage de 0,2 à 1,8 dtex, de préférence encore de 0,4 à 1,5 dtex et, en particulier de 0,7 et 1,2 dtex.

14. Procédé de détermination du comportement de pulvérisation lors de l'application de les masses de revêtement aqueuses, en particulier pouvant s'égoutter, selon l'une quelconque des revendications 1 à 7, à l'aide d'un rouleau, comprenant les étapes suivantes :
la mise à disposition d'un dispositif d'essai selon l'une quelconque des revendications 11 à 13 ;
la fixation d'un corps d'essai plan, en particulier d'une plaque de carton et de gypse, au substrat, vertical ou incliné par rapport à la verticale ;
la mise en place d'un corps de test plan, en particulier noir, sur une couche d'essai ;
le réglage de la force de pression du rouleau ;
le réglage de la vitesse de levage de la pièce coulissante ;
l'incorporation de la masse de revêtement pouvant s'égoutter dans le tissu de poils du rouleau, la fixation de l'étrier de rouleau dans le dispositif de raccordement ;
le démarrage du mouvement de levage de la pièce coulissante tout en appliquant la masse de revêtement à l'aide du rouleau sur le corps d'essai plan ;
l'arrêt du mouvement de levage de la pièce coulissante après au moins deux, en particulier trois à six, mouvements complets vers le haut et au moins deux, en particulier trois à six, mouvements complets vers le bas ;
la prise du corps d'essai plan et la détermination du poids du corps d'essai et la détermination de la différence entre le poids du corps d'essai après l'application de la masse de revêtement et avant l'application de la masse de revêtement ou ;
la détermination, en particulier optique, assistée par ordinateur, de la quantité et
éventuellement du volume de la projection de la masse de revêtement sur le corps d'essai.

15. Procédé selon la revendication 14, **caractérisé en ce que**
le rouleau est guidé avec une force de pression dans la plage de 20 N à 50 N, en particulier dans la plage de 30 N à 40 N, à l'aide de la pièce coulissante, le long du corps d'essai plan.
